# EUROPEAN PATENT SPECIFICATION

(11) **EP 4 463 503 B1**
(45) Date of publication and mention of the grant of the patent: **24.12.2025**
(21) Application number: 23701242.2
(22) Date of filing: 10.01.2023
(51) Int. Cl.: C08G 64/06, C08G 64/30

(54) **PROCESS FOR PREPARING POLYCARBONATE BY BLANC-TYPE METHYLATION**
VERFAHREN ZUR HERSTELLUNG VON POLYCARBONAT DURCH BLANC-METHYLIERUNG
PROCÉDÉ DE PRÉPARATION DE POLYCARBONATE PAR MÉTHYLATION DE TYPE BLANC

(30) Priority: 14.01.2022 EP 22151620
(43) Date of publication of application: 20.11.2024
(73) Proprietor: Covestro Deutschland AG, 51373 Leverkusen (DE)
(72) Inventor: GARSKA, Bernd, 51103 Koeln (DE); HEIJL, Jan, 2040 Antwerpen (BE); MAMPUYS, Pieter, 2240 Zandhoven (BE); MAES, Bert, 2610 Wilrijk (BE)
(74) Representative: Levpat
(86) International application number: PCT/EP2023/050378
(87) International publication number: WO 2023/135104

(56) References cited:
- US-A1- 2020 115 494
- US-B2- 8 962 788
- JIAN TANG ET AL: "An efficient and convenient chloromethylation of some aromatic compounds catalyzed by zinc iodide", JOURNAL OF CHEMICAL RESEARCH, 13 May 2019 (2019-05-13), pages 34 - 38, XP055932125, Retrieved from the Internet <URL:https://journals.sagepub.com/doi/pdf/10.1177/1747519819836488> [retrieved on 20220616]

## Description

The present invention relates to a process for preparing a polycarbonate using electrophilic aromatic substitution including the reaction of chlorosulfonic acid together with a specific compound of formula (2) as described below.

Polycarbonates, especially aromatic polycarbonates, are known to exhibit a good property profile with respect to mechanical and optical properties, heat resistance and weatherability. Due to this property profile they are used in various indoor and outdoor applications. Typically polycarbonates are prepared by the well-known interphase phosgenation process or the melt transesterification method. Both processes use bisphenols, e. g. bisphenol A ((2,2-bis(4-hydroxyphenol)propane), which react either with phosgene or a diarylcarbonate (cf. for example US8,962,788B2) to give a polymeric structure. This means that typically the polymeric backbone is defined by the structure of the diol and the carbonate group is introduced into this backbone by the polymerization reaction itself. With aromatic diols such as bisphenol A, bisphenol B, bisphenol C, bisphenol E, bisphenol F, bisphenol G, bisphenol M, bisphenol P, bisphenol TMC, bisphenol Z and e. g. specific bisphenols as described in US2020/0115494 A1, backbones are formed that comprise the carbonate group at the aromatic ring. This carbonate group is located *para* to the at least one other substituent at the aromatic ring which, depending on the specific structure of diol which is used, connects the carbonate-aromatic ring-group to the next carbonate group in the polycarbonate backbone.

However, there is a constant need for improving the property profile of the classical aromatic (co)polycarbonates including the use of bio-based aromatic diols. Thus, departing from the classical interphase phosgenation or melt transesterification process thought can be given to other reactions which connect aromatic moieties with carbonate groups. Therefore, it was an objective of the present invention to provide a process for preparing polycarbonates other than the interphase phosgenation or melt transesterification process. Preferably, it was an objective of the present invention to provide a process for the preparation of polycarbonates which includes a reaction which forms the polymer backbone which does not comprise the formation of a carbonate group. Still preferably, it was an object of the present invention to provide a process for the preparation of polycarbonates which includes a reaction for the formation of the polymer backbone which comprises the coupling of two aromatic moieties to each other. This reaction mandatorily requires that the aromatic moieties comprise carbonates substituents in order to obtain a polycarbonate, comprising carbonate groups. Therefore, it was also preferably an objective of the present invention to provide a process for the preparation of polycarbonates which is capable of coupling two aromatic moieties to each other, the aromatic moieties comprising carbonate groups, preferably in the backbone structure, and wherein those carbonate groups are not affected by the process as such. In this context the term "affected" preferably means that the carbonate is not degraded.

A well-known organic reaction is the "Blanc chloromethylation" which is used to obtain chloromethyl arenes by the reaction of formaldehyde and hydrogen chloride catalyzed by a Lewis acid such as zinc chloride. It was a further objective of the present invention to investigate whether the Blanc reaction as such or in an amended way can be used to obtain a polycarbonate.

The chloromethylation of an aromatic system in the presence of a carbonate group has hardly been reported in literature. In J. Med. Chem. 2006, 49, 1882-1890 it is shown that formaldehyde and hydrochloric acid can be used to introduce a chloromethyl moiety into differently substituted aromatics bearing a carbonate group. In 2019 the group of Zhang employed chlorosulfonic acid and dimethoxymethane for the introduction of a chloromethyl moiety on aromatic hydrocarbons in combination with ZnI₂ (J. Chem. Res. 2019, 43, 34-38) or ZnCl₂ (Synth. Commun. 2019, 49, 925-932 and Organic Preparations and Procedures International, 2020,52,6, 510-516) as catalyst. In both publications aromatic substrates having carbonate substituents are investigated. However, it is concluded that no biscarbonates are observable when using ZnCl₂ as catalyst. A disubstituted methane derivative was only obtained with a specific substrate (i.e. ethyl naphthyl carbonate) and ZnI₂ as catalyst *via* coupling of the benzene. Moreover, in CN108383744 A the synthesis of 2,6-dimethyltyrosine is described using the Blanc-type chloromethylation. Here, FeCl₃ is used as catalyst for the introduction of a chloromethyl moiety on an aromatic carbonate, but no biscarbonates have been prepared. This means it is only described that a chloromethyl group is introduced, but this chloromethyl group is not further coupled to another aromatic moiety.

Based on this prior art, it was a further object of the present invention to provide a process for preparing polycarbonates (other than the interphase phosgenation or the melt transesterification method) based on existing, but also novel aromatic building blocks, especially bio-based building blocks. Preferably, this process should be economically and ecologically beneficial. Moreover, this process preferably should result in a polycarbonate having a good property profile, especially with respect to mechanical and/or optical properties, heat resistance and/or weatherability.

At least one of the above-mentioned objects, preferably all of these objects have been solved by the present invention. Surprisingly, it has been found that an alternative process for preparing polycarbonates other than the interphase phosgenation or the melt transesterification method can be provided. Especially, a process for preparing polycarbonates can be provided which includes the reaction for the formation of the polymer backbone which comprises the coupling of two aromatic moieties to each other. Moreover, a process for preparing polycarbonates is provided which is capable of coupling two aromatic moieties to each other, the aromatic moieties comprising carbonate groups, and wherein those carbonate groups are not affected by the process as such. Surprisingly, it was identified that the Blanc-type chloromethylation employing chlorosulfonic acid and a compound of formula (2) can be used in order to couple two aromatic moieties bearing a carbonate group, preferably both bearing a carbonate group, with an optionally substituted alkylene bridge. This reaction as such can be used according to the present invention to polymerize such aromatic moieties to give a polycarbonate. This reaction can be used for existing building blocks (such as for example diphenyl carbonate), but also for novel, especially bio-based building blocks (such as guaiacol carbonate and/or bis(2-methoxy-4-propylphenyl) carbonate). Additionally, it was found that the reaction according to the present invention can be performed without the use of a metal-based Lewis acid. This on the one hand renders the process according to the present invention ecologically and economically beneficial. On the other hand, expensive catalysts can be omitted in the reaction. Additionally, also such a catalyst does not need to be removed from the resulting polycarbonate. This leads to the fact that the inventive process can be easily performed in terms of equipment for this process and subsequent steps for purification of the resulting polycarbonate. Moreover, the resulting polycarbonate obtained from this process preferably comprises a good property profile, especially with respect to mechanical and/or optical properties, heat resistance and/or weatherability.

Accordingly, the present invention provides a process for preparing a polycarbonate of formula (1) using electrophilic aromatic substitution, 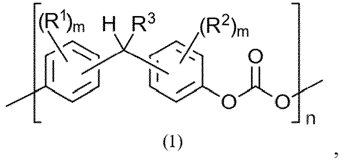
wherein in formula (1) each of R¹ and R² independently represents a substituent that is capable of activating the aromatic ring which it substitutes by a mesomeric effect and/or an inductive effect,
R³ represents a hydrogen atom, an aryl group or an alkyl group having 1 to 6 carbon atoms, preferably a hydrogen atom, a phenyl group or an alkyl group having 1 to 6 carbon atoms, each m independently is 0 to 4, preferably 0 to 3, more preferably 0 to 2, more preferably 0 to 1, more preferably 1 to 3, more preferably 1 to 2, still more preferably 3, most preferably 0, most preferably 1, most preferably 2 and
n is the number of repeating units, preferably 6 to 60,
comprising the steps of
   (a) reacting at least one compound of formula (2) with chlorosulfonic acid, wherein at least one molar equivalent of chlorosulfonic acid with respect to the molar sum of compounds of formula (2) is used, 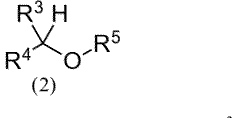
      wherein in formula (2) R³ represents a hydrogen atom, an aryl group or an alkyl group having 1 to 6 carbon atoms, preferably a hydrogen atom, a phenyl group or an alkyl group having 1 to 6 carbon atoms, and
      R⁴ represents -O-R⁵ or a halogen atom and
      R⁵ represent a linear alkyl group having 1 to 5 carbon atoms or R⁴ and R⁵ together form a cycle which may be interrupted by at least one oxygen atom,
         and
   (b) adding a compound of formula (3) to the reaction mixture of process step (a), 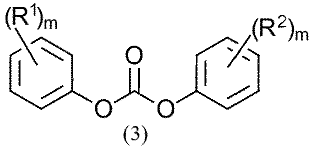
      wherein in formula (3) each of R¹ and R² independently represents a substituent that is capable of activating the aromatic ring, which it substitutes by a mesomeric effect and/or an inductive effect and each m independently is 0 to 4, preferably 0 to 3, more preferably 0 to 3, more preferably 0 to 1, more preferably 1 to 3, more preferably 1 to 2, still more preferably 3, most preferably 0, most preferably 1, most preferably 2,
      wherein either at least one halogenated solvent is added in process step (a) and/or (b) or no solvent is added at all to process step (a) and/or (b),
      characterized in that no metal-based Lewis acid is used in process step (a) and/or (b).

Polycarbonates in the context of the present invention are either homopolycarbonates or copolycarbonates; the polycarbonates may be linear or branched depending on the type of monomers used in the process of the present invention. For the purposes of the present invention, the expression "biobased" is understood as meaning that the relevant chemical compound is at the filing date available and/or obtainable *via* a renewable and/or sustainable raw material and/or preferably is such a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to differentiate it from raw materials produced from fossil raw materials, also referred to in accordance with the invention as petroleum-based. Whether a raw material is biobased or petroleum-based can be determined by the measurement of carbon isotopes in the raw material, since the relative amounts of the carbon isotope C14 are lower in fossil raw materials. This can be done, for example, in accordance with ASTM D6866-18 (2018) or ISO16620-1 to -5 (2015) or DIN SPEC 91236 2011-07.

According to the present invention reference is made to an electrophilic aromatic substitution. This process is known to the person skilled in the art and is described in various textbooks dealing with organic chemistry. The process according to the present invention is based on a blanc-type reaction, but includes amendments to the classical name reaction. Therefore, reference is rather made to the more general electrophilic aromatic substitution. However, the person skilled in the art, knowing and understanding the concepts of the Blanc reaction and once having perceived the present invention, can transfer the principles of this general concept to the amendments of the process of the present invention.

Moreover, according to the present invention reference is made to substituent(s) (of an aromatic ring) that is/are capable of activating the aromatic ring which it substitutes by a mesomeric effect and/or an inductive effect. In the context of an electrophilic aromatic substitution, this concept is known to the skilled person, too.

Preferably, the term "mesomeric effect" refers also to the known resonance effect. Still preferably, the term refers to the delocalization of electrons in a molecule by the interaction of two pi bonds or between a pi bond and a lone pair of electrons present on an adjacent atom. The term is preferably used to describe the electronic effect of a substituent on an aromatic moiety based on relevant resonance structures. It often is symbolized by the letter M. The mesomeric effect can preferably be negative (-M) when the substituent withdraws electrons from the arene ring through pi bonds - called resonance electron withdrawal. Still preferably, the effect can also be positive (+M, called resonance electron donation) when the substituent donates electrons through the pi bonds to the aromatic moiety.

Preferably, the term "inductive effect" or I effect refers to the displacement of electrons *via* sigma bonds towards a more electronegative atom. Due to the inductive effect one end of a bond obtains a partial positive charge and the other end a partial negative charge. Relative inductive effects of substituents bonded to an arene ring are described with reference to hydrogen. For example, with a +I-effect (electron-donating character) the substituent donates its sigma electrons to the arene ring more strongly than hydrogen will. In the same example, a substituent with a -I effect (electron-withdrawing character) will then more strongly withdraw or accept the sigma electrons compared to hydrogen.

Moreover, the M and I effect in the context of an electrophilic aromatic substitution are known to the person skilled in the art. It is known that existing substituent groups on the aromatic ring influence the overall reaction rate or have a directing effect on positional isomer of the products that are formed. Here, an electron donating group preferably is an atom or functional group that donates some of its electron density into a conjugated pi system *via* mesomeric or inductive effects. This makes the pi system more nucleophilic. In terms of regioselectivity, some existing substituent groups on the aromatic ring promote substitution at the *ortho* or *para*-position(s). Other groups favor substitution at the *meta-position.* Those groups are known to the skilled person. Substituents exhibiting a +I or +M effect direct into the *ortho-* and/or para-position. Substituents exhibiting -I or -M effect direct into the *meta-position.* As known to the skilled person, the M effect of a substituent is in principle more important than a I effect. This means that a +M effect can overrule a small -I effect.

According to the present invention, it was found that no additional substituent other than the carbonate group is required to conduct the process of the present invention. However, it was found that an additional substituent at the aromatic ring can be beneficial for the process. It is preferably beneficial with respect to selectivity and/or reactivity of the reaction. Therefore, it is preferred that each m in formula (1) and (3) respectively, independently is 0 to 3, preferably 0 to 2, more preferably 0 to 1, more preferably 1 to 3, more preferably 1 to 2, still more preferably 3, most preferably 0, most preferably 1, most preferably 2. The skilled person knows that steric effects need to be considered, too, because a bulky substituent at the aromatic ring might have also influence on the resulting product. Accordingly, choosing the substituent(s) of the aromatic ring, the skilled person is capable to influence the structure of the resulting polycarbonate.

According to the present invention, it was found that the process according to the present invention can be used to obtain a regular polymer backbone having either an *ortho-, meta-* or *para-linkage* between the aromatic moieties. This is especially achieved in case at least one of the optional substituents at the aromatic ring has a directing effect to the position which leads to a *meta-linkage.* According to the present invention *ortho-, meta-* or *para-* refer to the position at the aromatic ring with respect to the mandatory carbonate group at the same ring. The existing carbonate group has a small +M effect, directing the electrophile at the *para-*position. Without any additional substituent at the aromatic ring (m = 0), mainly a polymer having *para-linkage* is obtained. Nevertheless, also other linkages are observed. However, in a preferred embodiment of the invention it was found that by having at least one substituent at the aromatic ring, a very selective reaction takes place. Especially, if at least one substituent is present which has a *para* directing effect so that a *meta-linkage* with respect to the carbonate is obtained, a selective coupling takes place in that a polycarbonate is obtained which comprises essentially *meta-linkages.*

"Alkyl" in the context of the invention, for example and if not mentioned differently, refers to a linear or branched structure. Preferably, "alkyl" is methyl, ethyl, n-propyl, isopropyl, n-butyl, sec-butyl, *tert-butyl,* n-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-ethyl-2-methylpropyl. These structures can be limited in choice, in case the invention defines the carbon atoms of the alkyl. The same applies to the corresponding alkyl radical. When referring to the term "alkyl radical" it is preferably intended to refer to a rest or substituent at an aromatic ring.

"Aryl" in the context of the invention, for example and if not mentioned differently, refers to a carbocyclic aromatic moiety, preferably having 6 to 34 carbon atoms. Preferred examples for a C₄ to C₃₄ aryl are phenyl, *o-, p-,* m-tolyl, naphthyl, phenantrenyl, antracenyl, florenyl, most preferred is phenyl.

The above enumerations should be understood by way of example and not as a limitation.

According to the present invention, it was found that no Lewis acid is required in process step (a) and/or (b). The Lewis acid preferably acts as catalyst in process step (a) and/or (b). However, without the Lewis acid, still good yields, conversions, low reaction times and/or low temperatures are obtained / required. This renders the process according to the present invention ecologically and economically beneficial. This means that no catalyst is needed, which reduces costs and/or omits the necessity to purify the product etc. Polycarbonates are known to be degraded by some Lewis acids. This means that the present invention results in a product which is mainly stable. The term "Lewis acid" is known to the person skilled in the art. Preferably, according to the present invention, no metal-based Lewis acid is required in process step (a) and/or (b). Even more preferably, no zinc halogenide, especially no ZnCl₂ and/or no ZnI₂ is required in process step (a) and/or (b). However, according to the present invention it is possible to use a Brönsted acid. The term "Brönsted acid" is known to the person skilled in the art. Especially, this term relates to a proton donor. Preferred Brönsted acids are selected from the group consisting of sulfuric acid, HCl, CF₃SO₃H, HClO₄, FSO₃H, H₂SO₄, MeSO₃H, CF₃CO₂H, CCl₃CO₂H, MeCO₂H or combinations of those. Preferably, sulfuric acid and/or HCl can be used.

In a preferred embodiment of the present invention a process is provided, which is characterized in that the polycarbonate of formula (1) comprises a structure of formula (1a) 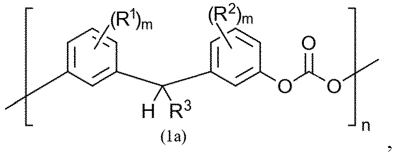
wherein in formula (1a) each of R¹ and R² independently represents a substituent that is capable of activating the aromatic ring which it substitutes by a mesomeric effect and/or an inductive effect,
R³ represents a hydrogen atom, an aryl group or an alkyl group having 1 to 6 carbon atoms, preferably a hydrogen atom, a phenyl group or an alkyl group having 1 to 6 carbon atoms,
each m independently is 0 to 4, preferably 0 to 3, more preferably 0 to 2, more preferably 0 to 1, more preferably 1 to 3, more preferably 1 to 2, still more preferably 3, most preferably 0, most preferably 1, most preferably 2 and
n is the number of repeating units, preferably 6 to 60,
wherein in process step (b) the compound of formula (3) as described above is added to the reaction mixture of process step (a), wherein each of R¹ and R² independently represents a substituent that is capable of activating the aromatic ring which it substitutes by a mesomeric effect and/or an inductive effect and each m independently is 0 to 4, preferably 0 to 3, more preferably 0 to 2, more preferably 0 to 1, more preferably 1 to 3, more preferably 1 to 2, still more preferably 3, most preferably 0, most preferably 1, most preferably 2.

According to the present invention, it was found that the process according to the present invention preferably can be used to obtain a regular polymer backbone mainly having a *meta-*linkage between the aromatic moieties. This is especially achieved in case at least one of the optional substituents at the aromatic ring has a *para* directing effect. Moreover, this is even more preferably the case when at least one of the optional substituents at the aromatic ring has *a para* directing effect and is positioned at the ring so that the *para* directing effect leads the electrophile to the position which is *meta* with respect to the carbonate group at the same ring. The existing carbonate group has a small +M effect, directing the electrophile at the *para-*position. However, this effect can be overruled by the preferred at least one substituent. Moreover, the effect of a selective reaction is even more pronounced if two substituents are present in addition to the carbonate group which are capable due to their chemical nature to direct the electrophile to the very same carbon atom (this means depending on the substitution scheme, both substituents can have an *ortho-*/*para-directing* effect or one substituent has an *ortho-*/*para-directing* effect and the other one a *meta*-directing effect). Accordingly, preferably the process of the present invention is characterized in that each of R¹ and R² in formula (1a) and/or (3) independently represents a substituent, preferably with a +I and/or +M effect, that is capable of directing an electrophile into *meta*-position at the aromatic ring which is *meta* with respect to the carbonate group at the same aromatic ring. Moreover, it is preferred that m in formula (1) or (1a) and in formula (3) is 1 to 3. This means that at least one additional substituent is present. More preferably m is 1 to 2, most preferably 0, most preferably 1 and most preferably 2. The at least one additional substituent typically increases the reactivity of the aromatic ring. This preferably means that the reactivity towards the aromatic electrophilic substitution is increased with respect to a substrate that only comprises a carbonate group (and m is 0). Moreover, it has been found that the at least one additional substituent typically overrules the *para*-directing effect of the carbonate group, so that a regular polymer can be found which has a *meta*-linkage.

Preferably, the process of the present invention is characterized in that the polycarbonate of formula (1a) is represented by the polycarbonate of formula (1b) 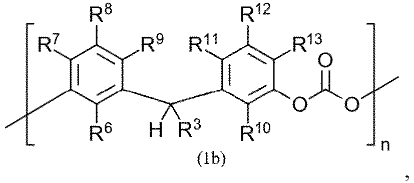
wherein in formula (1b) at least one of R⁶, R⁷, R⁸ and R⁹ is a hydrogen atom and at least one of R¹⁰, R¹¹, R¹² and R¹³ is a hydrogen atom with the proviso that at least one of R⁶, R⁷, R⁸ and R⁹ is not a hydrogen atom and at least one of R¹⁰, R¹¹, R¹² and R¹³ is not a hydrogen atom,
each of R⁶ and R¹⁰ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms, preferably each of R⁶ and R¹⁰ independently represents a hydrogen atom, -OR' or an alkyl radical having 1 to 6 carbon atoms, wherein each R' independently represents an alkyl radical having 1 to 6 carbon atoms, most preferably each of R⁶ and R¹⁰ independently represents a hydrogen atom,
each of R⁷ and R¹³ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms, preferably each of R⁷ and R¹³ independently represents a hydrogen atom, -OR' or an alkyl radical having 1 to 6 carbon atoms, wherein each R' independently represents an alkyl radical, most preferably each of R⁷ and R¹³ independently represents -OR' or an alkyl radical having 1 to 6 carbon atoms, wherein each R' independently represents an alkyl radical having 1 to 6 carbon atoms,
each of R⁸ and R¹² independently represent a hydrogen atom, -NO₂, -NR'₃⁺, -CF₃, -CCl₃, - C(=O)R' or -CN, wherein each R' independently represents an alkyl radical having 1 to 6 carbon atoms, preferably each of R⁸ and R¹² independently represent a hydrogen atom,
each of R⁹ and R¹¹ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms, preferably each of R⁹ and R¹¹ independently represents a hydrogen atom,
and R³, m and n have the meanings as given with respect to formula (1a),
wherein in process step (b) a compound of formula (3b) is added to the reaction mixture of process step (a), 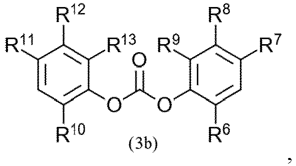
wherein R⁶ to R¹³ in formula (3b) have the meaning as given with respect to formula (1b).

The skilled person knows how the choice of any formula (3), (3a) and/or (3b) has an effect of the resulting formula (1), (1a) and/or (1b). Thus, he or she is able to predict the influences of the structure of formula (3), (3a) and/or (3b).

In another preferred embodiment of the present invention in formula (1b) at least one of R⁶, R⁷, R⁸ and R⁹ is a hydrogen atom and at least one of R¹⁰, R¹¹, R¹² and R¹³ is a hydrogen atom and all definitions for R⁶ to R¹³ as given above are possible.

Preferably, the process of the present invention is characterized in that each of R⁶, R⁸, R¹⁰ and R¹² in formula (1b) and/or (3b) represents a hydrogen atom. Still more preferably, it each of R⁷, R⁹, R¹¹ and R¹³ in formula (1b) and/or (3b) independently represents a hydrogen atom, -OCH₃, -OCH₂CH₃, -OCH₂CH₂CH₃, -OCH₂CH₂CH₂CH₃, -CH₃, -CH₂CH₃, -CH₂CH₂CH₃, -CH₂CH₂CH₂CH₃ or -C(CH₃)₃. Even more preferably, each of R⁶, R⁸, R¹⁰ and R¹² in formula (1b) and/or (3b) represents a hydrogen atom, each of R⁹ and R¹³ represents -OCH₃ and each of R⁷ and R¹¹ represents a hydrogen atom, -CH₂CH₂CH₃ or -C(CH₃)₃.

In the process of the present invention in any of the above given preferences and combinations of preferences it is very preferred that R³ represents a hydrogen atom or a phenyl group.

Preferably, the polycarbonate comprises at least 30 wt.-%, more preferably at least 60 wt.-%, still more preferably at least 80 wt.-% and most preferably at least 90 wt.-% of the structure of formula (1), wherein the wt.-% is based on the total weight of the polycarbonate. Still preferably, the polycarbonate comprises at least 30 wt.-%, more preferably at least 60 wt.-%, still more preferably at least 80 wt.-% and most preferably at least 90 wt.-% of the structure of formula (1a), wherein the wt.-% is based on the total weight of the polycarbonate. Still preferably, the polycarbonate comprises at least 30 wt.-%, more preferably at least 60 wt.-%, still more preferably at least 80 wt.-% and most preferably at least 90 wt.-% of the structure of formula (1b), wherein the wt.-% is based on the total weight of the polycarbonate. Most preferably, the polycarbonate essentially consists of or consists of the structure of formula (1). Still most preferably, the polycarbonate essentially consists of or consists of the structure of formula (1a). Still most preferably, the polycarbonate essentially consists of or consists of the structure of formula (1b). It is clear that the term "consists of" in this case excludes the terminal groups which are additionally present.

In case, formula (3) is diphenyl carbonate (meaning that m= 0) the resulting polycarbonate comprises at least 50 wt.-%, more preferably at least 70 wt.-% and most preferably more than 85 wt.-% of structures of formula (1) in which a *para*-linkage with respect to the carbonate group is present.

According to the present invention it is preferred that the polycarbonate of formula (1), formula (1a) and/ or formula (1b) has a weight average molecular weight of 15000 g/mol to 40000 g/mol, more preferably 16000 g/mol to 34000 g/mol, still more preferably 17000 g/mol to 33000 g/mol and most preferably 19000 g/mol to 32000 g/mol as determined *via* size exclusion chromatography. Preferably, this size exclusion chromatography is calibrated using a bisphenol A polycarbonate and dichloromethane as eluent. Typically, linear polycarbonate (obtained from BPA and phosgene) having a known molecular weight distribution of PSS Polymer Standards Service GmbH, Deutschland can be used for the calibration. Most preferably, the calibration is performed according to method 2301-0257502-09D method (from 2009 in German) from the company Currenta GmbH & Co. OHG, Leverkusen. The eluent is dichloromethane. Preferably, a combination of columns based on crosslinked styrene divinylbenzene resins is used. Still preferably, the diameter of the analytical columns is 7,5 mm, length of 300 mm. The particle size of the column material is preferably 3 µm to 20 µm. The concentration of the solution is preferably 0.2 wt.-%. The flow rate is preferably 1.0 ml/min. The temperature of the solution is preferably 30 °C. Preferably, a UV- and/or RI-detection is used.

Formula (1), (1a) and / or (1b) recite "n" as number of repeating units. Preferably, n is 6 to 60, more preferably it is 10 to 55, even more preferably it is 20 to 50, still more preferably it is 25 to 45 and most preferably it is 30 to 40.

According to the present invention, the process comprises a process step (a) in which chlorosulfonic acid is reacted with at least one compound of formula (2). It has been found according to the present invention that other acids such as sulfuric acid, sulfuryl chloride, acetyl chloride or HCl do not result in any yield of the desired polycarbonate.

In formula (2) R³ represents a hydrogen atom, an aryl group or an alkyl group having 1 to 6 carbon atoms, preferably 1 to 3 carbon atoms, most preferably 1 or 2 carbon atoms and R⁴ represents -O-R⁵ or a halogen atom and R⁵ represent a linear alkyl group having 1 to 5 carbon atoms or R⁴ and R⁵ together form a cycle which may be interrupted by at least one oxygen or sulphur atom, preferably at least one oxygen atom. More preferably in this case R³ represents a hydrogen atom, a phenyl group or an alkyl group having 1 to 6 carbon atoms, preferably 1 to 3 carbon atoms, most preferably 1 or 2 carbon atoms. In the case, where R⁴ and R⁵ together form a cycle which may be interrupted by at least one oxygen atom, it is preferred that formula (2) is trioxane. In case R⁴ is -O-R⁵, both R⁵ in formula (2) can be the same or different. It has been found that when using a compound having a phenyl group at the same carbon atom as the R³, the reaction does not take place at all. Preferably, the compound of formula (2) is represented by formula (2a): 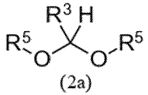 in which R³ and each of R⁵ independently have the above given meanings. Preferably, each of R⁵ in formula (2a) independently represents a linear alkyl group having 1 to 4 carbon atoms, more preferably 1 to 3 carbon atoms and most preferably 1 to 2 carbon atoms.

It is preferred that R⁴ represents -Cl, -Br, -O-CH₃ or -O-CH₂-CH₃. Moreover, and preferably at the same time, it is preferred that R⁵ represents -CH₃ or -CH₂-CH₃.

It was assumed that a compound of formula (2) in which R⁴ represents a halogen atom, preferably chlorine, is formed *in situ* during process step (a) and/or (b). As the experimental part shows, such a compound is reactive in the process according to the present invention, too.

Moreover, in process step (a) at least one molar equivalent of chlorosulfonic acid with respect to the molar sum of compounds of formula (2) is used. Preferably, the molar ratio of the compound of formula (2) to the chlorosulfonic acid in process step (a) is 1.0 to 2.5, more preferably 1.0 to 2.3. It was found that having 1.5 to 2.5, preferably 1.8 to 2.2 and most preferably 1.9 to 2.1 molar equivalent of chlorosulfonic acid with respect to the molar sum of compounds of formula (2) is beneficial for obtaining a good yield. However, it was also shown that at least one equivalent of a second proton source (e. g. a Brönsted acid) can also lead to good yields. This means that if only 1.0 molar equivalent of chlorosulfonic acid with respect to the molar sum of compounds of formula (2) is used, at least one additional Brönsted acid needs to be added to process step (a). According to the present invention it is preferred that in process step (a) at least one compound of formula (2) is reacted with chlorosulfonic acid in the presence of an additional Brönsted acid. This additional Brönsted acid is different from the chlorosulfonic acid. For example, sulfuric acid, HCl, CF₃SO₃H, HClO₄, FSO₃H, H₂SO₄, MeSO₃H, CF₃CO₂H, CCl₃CO₂H or MeCO₂H can be used. Preferably, sulfuric acid or HCl can be used. It is preferable that the molar sum of the chlorosulfonic acid and the additional Brönsted acid is 1.5 to 2.5, preferably 1.8 to 2.2 and most preferably 1.9 to 2.1 molar equivalents with respect to the molar sum of compounds of formula (2).

According to the present invention, it was found that the addition order of the chlorosulfonic acid, the at least one compound of formula (2) and the at least one compound of formula (3) is crucial for obtaining a polycarbonate. Only if the chlorosulfonic acid and the at least one compound of formula (2) are premixed or prereacted in process step (a) the formation of a polycarbonate could be observed.

Process step (a) and /or (b) can be performed in an open or sealed reactor. Moreover, each of the process steps can be performed with or without the presence of an inert gas. Although the reaction can take place in the presence of air, it is beneficial for the yield to perform it in the presence of an inert gas. Therefore, it is preferred that process step (a) and /or (b) are performed under inert atmosphere, preferably under argon or nitrogen.

In process step (a) the chlorosulfonic acid is reacted with at least one compound of formula (2). Preferably, process step (a) and/or the addition of a compound of formula (3) to the reaction mixture in process step (b) is performed at temperatures below room temperature, more preferably below 10 °C and most preferably below 5 °C. Due to the fact that the reaction is exothermic, the reaction temperature can rise during the process. Accordingly, additional cooling might be required. Preferably, during the whole process step (a) and/or the addition of a compound of formula (3) to the reaction mixture in process step (b) temperatures are kept below room temperature, more preferably below 10 °C and most preferably below 5 °C. However, the person skilled in the art is aware of the fact that there are common limitations and considerations with respect to the lower limit of temperature. As this reaction is exothermic, slow feeding of one component to the other is beneficial for process steps (a) and/or (b). The skilled person knows how to design a respective process. Moreover, the skilled person knows how to design a respective process and keeping the temperatures in the above given preferred ranges. According to the present invention it is possible that after some time of reaction in process step (b) , the temperature is increased either actively or by omitting any cooling apparatus. The skilled person is capable of adapting reaction temperature and reaction time in order to optimize yields.

According to the present invention, in process step (b) a compound of formula (3) is added to the reaction mixture of process step (a). As indicated above, the skilled person is able to predict the influence of the choice of a compound of formula (3) on the resulting polycarbonate of formula (1). As indicated above, the compound of formula (3) is preferably represented by formula (3b).

Preferably, at the latest at process step (b) the temperature of the reaction system is increased. Preferably, the temperature is increased above room temperature. It has been found that when increasing the temperature in process step (b), the yield can be optimized.

It was found that according to the present invention either at least one halogenated solvent is added in process step (a) and/or (b) or no solvent is added at all to process step (a) and/or (b). This means that process step (a) and/or (b) can be performed neat or in the presence of at least one halogenated solvent. Preferably, the at least one halogenated solvent is added to process step (a) and/or (b) which is selected from the group consisting of dichloromethane, chloroform, trichloroethylene and chlorobenzene. Preferably, the either at least one halogenated solvent is added in process step (b) or no solvent is added at all to process step (b). Preferably, the at least one halogenated solvent which is added to process step (b) is selected from the group consisting of dichloromethane, chloroform, trichloroethylene and chlorobenzene. This means that it is preferred that no solvent is added to process step (a).

Preferably, the compound of formula (3) is added in process step (b) in a molar ratio with respect to the compound of formula (2) which has been provided in process step (a) of 0.8 to 2.0, more preferably 0.9 to 1.5 and most preferably 0.95 o 1.15.

In another aspect of the present invention, polycarbonates obtainable by the process of the present invention are provided. Those polycarbonates exhibit a good property profile, especially with respect to mechanical and/or optical properties, heat resistance and/or weatherability.

### Brief description of the Figures

- Figure 1.: Nano-electrospray mass spectrum in DMSO of inventive example 6.
- Figure 2.: Nano-electrospray mass spectrum in DMSO of inventive example 7.
- Figure 3.: Nano-electrospray mass spectrum in DMSO of inventive example 8.
- Figure 4.: Nano-electrospray mass spectrum in DMSO of inventive example 9.

### Examples

The following examples are used to describe the invention. It is to be noted that sometimes reactions are studied that do not represent polymerizations, but rather study the coupling of one aromatic moiety with another aromatic moiety, wherein at least one of those moieties comprise a carbonate group. However, based on those examples (indicated as "Reference"), the skilled person can easily conclude that and how a polymerization reaction as such can be performed.

### Materials used in the examples

All solvents and commercially available reagents were used as received.

Commercially available chemicals

| Chemical | CAS-number | Supplier | Purity (GC) |
|---|---|---|---|
| Dimethoxymethane | 109-87-5 | Sigma-Aldrich | Absolute over molecular sieves |
| Chlorosulfonic acid | 7790-94-5 | Sigma-Aldrich | 99% |
| Methyl chloroformate | 79-22-1 | Acros | 99% |
| Triethylamine (NEt₃) | 121-44-8 | Acros | 99% |
| 4-Dimethylaminopyridine | 1122-58-3 | Fluorochem | 99% |
| Pyridine | 110-86-1 | Sigma-Aldrich | 99% |
| 2-Methoxyphenol | 90-05-1 | Acros | 99% |
| 2-Methoxy-4-propylphenol | 2785-87-7 | Sigma-Aldrich | 99% |
| 3-Methoxyphenol | 150-19-6 | Acros-Organics | 97% |
| 4-Hydroxy-3-*tert*-butylanisole | 121-00-6 | TCI | >98% |
| 2,2-Dimethoxypropane | 77-76-9 | TCI | >98% |
| Dimethoxydiphenylmethane | 2235-01-0 | TCI | >98% |
| *α,α*-Dimethoxytoluene | 1125-88-8 | Sigma-Aldrich | 99% |
| Diethoxyethane | 462-95-3 | Acros Organics | 99% |
| Diphenoxymethane | 4442-41-5 | TCI | >98% |
| Sulfuric acid | 7664-93-9 | Acros Organics | For analysis, 96% |
| Sulfuryl chloride | 7791-25-5 | Sigma-Aldrich | 97% |
| Acetyl chloride | 75-36-5 | Sigma-Aldrich | 98% |
| HCl in dioxane (4 M) | 7647-01-0 | Acros-Organics | not indicated |
| Methyl phenyl carbonate | 13509-27-8 | Fluorochem | 97% |
| Diphenyl carbonate | 102-09-0 | TCI | 99% |
| Guaiacol carbonate | 553-17-3 | TCI | >98% |
| Magnesium perchlorate | 10034-81-8 | Sigma-Aldrich | ACS grade |
| Dimethyl dicarbonate | 4525-33-1 | Sigma-Aldrich | ACS grade |
| Magnesium sulfate (MgSO₄) | 22189-08-8 | Acros-Organics | 99%, extra pure, dried |
| Celite | 68855-54-9 | Chem-Lab NV | Not indicated |
| Sodium chloride (NaCl) | 7647-14-5 | Acros-Organics | 99.5% |
| Silica (SiO₂) | 7631-86-9 | Macherey-Nagel | Particle size 40-63 µm, pore diameter 60 Å |
| Deuterated chloroform (CDCl₃) | 865-49-6 | Eurisotop | 99.8% D |
| FeCl₃·4H₂O | 10025-77-1 | Sigma-Aldrich | 99% |
| FeBr₃ | 10031-26-2 | Sigma-Aldrich | 98% |
| FeCl₃ | 7705-08-0 | Alfa Aesar | 98% |
| TiCl₄ | 7550-45-0 | Acros Organics | 99.9% |
| ZnCl₂ | 7646-85-7 | Sigma-Aldrich | 99.9% |
| ZnI₂ | 10139-47-6 | Acros Organics | 99.98% trace metal analysis |
| Cyclopentyl methyl ether (dry) | 5614-37-9 | Acros Organics | 99.5%, extra dry |
| Dichloromethane (dry, DCM) | 75-09-2 | Acros Organics | >99%, extra dry |
| Dichloromethane (DCM) | 75-09-2 | Fisher Chemical | 99.8%, analytical reagent grade |
| Dimethyl sulfoxide (DMSO) | 67-68-5 | Fisher Chemical | 99.8%, analytical reagent grade |
| Ethyl acetate (EtOAc) | 141-78-6 | Fisher Chemical | 99.8%, analytical reagent grade |
| Heptane | 64742-49-0 | Fisher Chemical | Extra pure, but distill prior to use |
| Methanol (dry, MEOH) | 67-56-1 | Acros Organics | 99.8%, extra dry |
| Methanol | 67-56-1 | Fisher Chemical | 99.8%, analytical reagent grade |
| Methyl ethyl ketone (dry) | 78-93-3 | Acros Organics | 99.5%, extra dry |
| *tert*-Butyl methyl ether (MTBE) | 1634-04-4 | Fisher Chemical | Extra Pure, SRL |

### Non-commercial chemicals

### General procedure 1:

A round-bottomed flask equipped with a stir bar, was charged with the substituted phenol (1.0 equiv), triethylamine (1.2 equiv) and dichloromethane (25 mL). The mixture was cooled to 0 °C in an ice-water bath. Subsequently, methyl chloroformate (1.2 equiv) was added dropwise over a period of 10 minutes. The mixture was stirred at room temperature for the indicated time. The precipitate was filtered off over a paper filter. The filtrate was extracted with HCl (1 M, 1 x 30 mL), NaOH (0.5 M, 30 mL) and with saturated aqueous NaCl solution (1 x 30 mL). The organic layer was dried over anhydrous MgSO₄, filtered and concentrated *in vacuo.* The product was purified as indicated.

### General procedure 2:

An oven dried round-bottomed flask equipped with a stir bar, was charged with the substituted phenol, triethylamine and dichloromethane (20 mL) under argon atmosphere. The mixture was cooled to 0 °C in an ice-water bath and stirred for 10 minutes. Subsequently, triphosgene dissolved in DCM (4 mL) was added dropwise over a period of 10 minutes. The mixture was stirred at room temperature for the indicated time. The filtrate was extracted with HCl (1 M, 1 x 30 mL), NaOH (0.5 M, 30 mL) and with saturated aqueous NaCl solution (1 x 30 mL). The water layer was extracted with DCM (2 x 30 mL). The combined organic layers were dried over anhydrous MgSO₄, filtered and concentrated *in vacuo.* The product was purified as indicated.

### 2-Methoxyphenyl methyl carbonate

General procedure 1 was applied using 2-methoxyphenol (1.241 g, 10.0 mmol), NEt₃ (1.7 mL, 12.0 mmol), and methyl chloroformate (980 µL, 9.6 mmol) for 2 h. Product was obtained in 80% (1.455 g) yield.

White solid, m.p.: 31 - 32 °C, ¹H NMR (400 MHz, DMSO-d₆): δ 7.28 - 7.24 (m, 1H), 7.19 (dd, *J* = 7.9, 1.6 Hz, 1H), 7.15 (dd, *J =* 8.3, 1.3 Hz, 1H), 6.97 (td, *J =* 7.7, 1.5 Hz, 1H), 3.81 (s, 3H), 3.79 (s, 3H) ppm. ¹³C NMR (101 MHz, CDCl₃): δ 153.3 (C), 150.9 (C), 139.5 (C), 127.3 (CH), 122.4 (CH), 120.6 (CH), 113.0 (CH), 55.8 (CH₃), 55.5 (CH₃) ppm. HRMS for C₉H₁₁O₄ [M+H]⁺ calc. 183.0652, found 183.0653.

### 2-Methoxy-4-propylphenyl methyl carbonate

A dry 100 mL round-bottomed flask equipped with a stirring bar was charged with magnesium perchlorate (223 mg, 1.0 mmol), 2-methoxy-4-propylphenol (8.01 mL, 50 mmol) and dimethyl dicarbonate (10.7 mL, 100 mmol). The flask was flushed with argon and equipped with a reflux condenser. The mixture was stirred at 40 °C for 17 h. After cooling to room temperature, the mixture was filtered over a plug of Celite with MTBE (50 mL). The filtrate was evaporated (2 mbar, 60 °C) for 3 h. Vacuum distillation (96 °C, 0.14 mbar) gave the product in 92% (2.20 g) yield.

Colorless oil, ¹H NMR (400 MHz, CDCl₃): δ 7.02 (d, *J =* 8.0 Hz, 1H), 6.79 (d, *J* = 1.7 Hz, 1H), 6.75 (dd, *J =* 8.1, 1.9 Hz, 1H), 3.89 (s, 3H), 3.84 (s, 3H), 2.58 (t, *J =* 7.5 Hz, 2H), 1.65 (sext, *J* = 7.4 Hz, 2H), 0.96 (t, *J =* 7.4 Hz, 3H) ppm. ¹³C NMR (101 MHz, CDCl₃): δ 154.2 (C), 150.9 (C), 142.1 (C), 138.2 (C), 122.0 (CH), 120.6 (CH), 112.9 (CH), 56.0 (CH₃), 55.5 (CH₃), 38.1 (CH₂), 24.6 (CH₂), 13.9 (CH₃) ppm. HRMS (ESI) for C₁₂H₁₆O₄Na [M+Na]⁺ calcd. 247.0941, found 247.0935.

### 3-Methoxyphenyl methyl carbonate

General procedure 1 was applied using 3-methoxyphenol (880 µL, 8.0 mmol), NEt₃ (1.4 mL, 9.6 mmol), 4-dimethylaminopyridine (49 mg, 5 mol%), and methyl chloroformate (930 µL, 9.6 mmol). The mixture was stirred for 3 h. The product was obtained in 67% (970 mg) yield.

Yellow oil, ¹H NMR (400 MHz, CDCl₃): δ 7.28 (t, *J =* 8.2 Hz, 1H), 6.81 - 6.77 (m, 2H), 6.74 (t, *J* = 2.3 Hz, 1H), 3.90 (s, 3H), 3.80 (s, 3H) ppm. ¹³C NMR (101 MHz, CDCl₃): δ 160.7 (C), 154.3 (C), 152.2 (C), 130.0 (CH), 113.3 (CH), 112.1 (CH), 107.1 (CH), 55.6 (CH₃), 55.5 (CH₃) ppm. HRMS (ESI) for C₉H₁₁O₄ [M+H]⁺ calc. 183.0652, found 183.0653.

### 2-(tert-Butyl)-4-methoxyphenyl methyl carbonate

General procedure 1 was applied using 4-hydroxy-3-*tert*-butylanisole (1.802 g, 10.0 mmol), NEt₃ (1.7 mL, 12.0 mmol) and methyl chloroformate (1.2 mL, 12.0 mmol). The mixture was stirred overnight. The product was purified by an automated flash chromatography system using a Heptane / EtOAc gradient (from 100% Heptane to 5% EtOAc in 40 min, 25 mL/min). The product was obtained in 47% (1.115 g) yield.

Colourless oil, ¹H NMR (400 MHz, CDCl₃): δ 7.01 (d, *J =* 8.8 Hz, 1H), 6.92 (d, *J =* 3.0 Hz, 1H), 6.74 (dd, *J =* 8.8, 3.0 Hz, 1H), 3.91 (s, 3H), 3.80 (s, 3H), 1.35 (s, 9H) ppm. ¹³C NMR (101 MHz, CDCl₃): δ 157.3 (C), 155.0 (C), 143.7 (C), 142.6 (C), 124.2 (CH), 113.9 (CH), 110.9 (CH), 55.7 (CH₃), 55.5 (CH₃), 34.8 (C), 30.2 (CH₃) ppm. HRMS (ESI) for C₁₃H₁₈O₄K [M+K]⁺ calcd. 277.0837, found 277.0828.

### Bis(3-methoxyphenyl) carbonate

General procedure 2 was applied using 3-methoxyphenol (1.3 mL, 12.0 mmol), NEt₃ (2.1 mL, 15.0 mmol) and triphosgene (593 mg, 2.0 mmol). The mixture was stirred for 5 h. The product was obtained in 83% (1.360 g) yield without further purification.

Yellow oil, ¹H NMR (400 MHz, CDCl₃): δ 7.32 - 7.28 (m, 2H), 6.89 - 6.81 (m, 6H), 3.81 (s, 6H) ppm. ¹³C NMR (101 MHz, CDCl₃): δ 160.7 (C), 152.1 (C), 152.0 (C), 130.1 (CH), 113.2 (CH), 112.4 (CH), 107.1 (CH), 55.7 (CH₃) ppm. HRMS (ESI) for C₁₅H₁₄O₅K [M+K]⁺ calcd. 313.0473, found 313.0473.

### Bis(2-(tert-butyl)-4-methoxyphenyl) carbonate

General procedure 2 was applied using 4-hydroxy-3-*tert*-butylanisole (1.802 g, 10.0 mmol), NEt₃ (1.6 mL, 11.7 mmol) and triphosgene (593 mg, 2.0 mmol). The mixture was stirred overnight. The product was purified by an automated flash chromatography system using a Heptane / EtOAc gradient (from 100% Heptane to 30% EtOAc in 35 min, 25 mL/min) and obtained in 57% (1.097 g) yield.

White solid, m.p.: 123 - 125 °C, ¹H NMR (400 MHz, CDCl₃): δ 7.10 (d, *J =* 8.8 Hz, 2H), 6.96 (d, *J* = 2.9 Hz, 2H), 6.76 (d, *J =* 8.8, 2.9 Hz, 2H), 3.81 (s, 6H), 1.45 (s, 18H) ppm. ¹³C NMR (101 MHz, CDCl₃): δ 157.3 (C), 153.2 (C), 143.7 (C), 142.5 (C), 124.1 (CH), 113.9 (CH), 110.9 (CH), 55.6 (CH₃), 34.9 (C), 30.3 (CH₃) ppm. HRMS (ESI) for C₂₃H₃₀O₅ [M+K]⁺ calcd. 425.1725, found 425.1721.

### Bis(2-methoxy-4-propylphenyl) carbonate

A reactor was charged with 2-methoxy-4-propylphenol (83.1 g, 0.5 mol), pyridine (79.1 g, 1.0 mol) and dichloromethane (606 mL). The temperature was maintained at 25 °C *via a* thermostatic bath before phosgene (27.2 g, 0.28 mol) was added over a period of 15 minutes. The mixture was flushed with nitrogen for 45 minutes before it was washed twice with an aqueous HCl solution (10%, 400 mL) and three times with H₂O (400 mL). The solvent was removed and the product dried overnight at room temperature under vacuum. Bis(2-methoxy-4-propylphenyl) carbonate was obtained in 99% yield (88.95 g).

White solid, m.p.: 66 - 67 °C, ¹H NMR (400 MHz, CDCl₃): δ 7.13 (d, *J =* 8.1 Hz, 2H), 6.81 (d, *J* = 1.7 Hz, 2H), 6.77 (dd, *J =* 8.1, 1.8 Hz, 2H), 3.89 (s, 6H), 2.75 - 2.21 (m, 4H), 1.75 - 1.60 (m, 4H), 3.84 (s, 6H), 0.96 (t, *J =* 7.3 Hz, 6H) ppm. ¹³C NMR (101 MHz, CDCl₃): δ 151.8 (C), 150.9 (C), 142.1 (C), 138.4 (C), 122.0 (CH), 120.6 (CH), 113.1 (CH), 56.2 (CH₃), 38.1 (CH₂), 24.6 (CH₂), 13.9 (CH₃) ppm. HRMS for C₂₁H₂₆O₅Na [M+Na]⁺ calcd. 381.1672, found 381.1674.

### General considerations and methods

Nuclear Magnetic Resonance (NMR) spectra were recorded on a Bruker Avance III 400 (101 MHz for ¹³C) Fourier Transform NMR spectrometer at 300 K (unless stated otherwise), using the non or partly deuterated solvent as internal standard (¹H: *δ* = 7.26 ppm, ¹³C: *δ* = 77.16 ppm for CDCl₃). Chemical shifts (*δ*) are given in ppm and coupling constants (*J*) are reported in Hertz (Hz). Multiplicities are described as s (singlet), d (doublet), t (triplet), q (quartet), br s (broad singlet) and m (multiplet) or combinations thereof.

High resolution mass spectrometry (HRMS) samples were prepared by dissolving 0.1-5 mg of the compound in CH₃CN/H₂O and further diluted to a concentration of 10⁻⁵-10⁻⁶ M. Formic acid (0.1%) was added prior to injection. 10 µL of each sample was injected using the CapLC system (Waters, Manchester, UK) and electrosprayed using a standard electrospray source. Samples were injected with an interval of three minutes. Positive ion mode accurate mass spectra were acquired using a Q-TOF II instrument (Waters, Manchester, UK). The MS was calibrated prior to use with a 0.1% H₃PO₄ solution. The spectra were lock mass corrected using the known mass of the nearest H₃PO₄ cluster or a known background ion. Analytes were detected as protonated, sodium or as potassium adduct. All measured masses are within a difference of 5 ppm compared to the calculated mass unless specified otherwise.

Nano-electrospray mass analysis samples were prepared by dissolving 4 mg of the obtained solid in 1 mL of DMSO. This mixture was diluted by taking 10 µL and dissolving it in 990 µL DMSO and taking 100 µL from this solution and adding 900 µL of DMSO. The measurement was done by placing 3 µL of the obtained sample in a in a gold-coated borosilicate needle (in house made). The sample was then sprayed from this needle using a nano-electrospray source (Waters). Positive ion mode accurate mass spectra were acquired using a Q-TOFII instrument (Waters, Manchester, UK).

Flash chromatography was performed either manually on SiO₂ (particle size 40-63 µm, pore diameter 60 Å) using the indicated eluent and visualized by UV detection (254 nm) or on an automated chromatography system (Biotage^{®} One Isolera Automatic Flash) with on-line UV detection using Grace^{®} Silica flash Cartridges.

Thin Layer Chromatography (TLC) was performed using TLC plates from Merck (SiO₂, Kieselgel 60 F254 neutral, on aluminium with fluorescence indicator) and compounds were visualized by UV detection (254 nm) unless mentioned otherwise.

Melting points were recorded on a Büchi M-565 melting point apparatus and are uncorrected.

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/l, flow rate 1.0 ml/min, at a temperature of 30°C using UV and/or RI detection.

### Reaction Optimization

### Preliminary screening of the reaction conditions

### Synthetic Procedure:

An oven dried pressure vial of 10 mL equipped with a stir bar, was charged with anhydrous ZnCl₂ (0.1 mmol, 10 mol%) and chlorosulfonic acid under inert atmosphere. The vial was cooled to the indicated temperature, followed by dropwise addition of dimethoxymethane. After stirring for 30 minutes, 2-methoxyphenyl methyl carbonate (1.0 mmol) was slowly added neat into the reaction mixture. The mixture was stirred for 2 h at the indicated temperature, then for 2 h at room temperature before it was quenched by the addition of water (8 mL). After extraction with EtOAc (20 mL), the organic phase was washed with saturated aqueous NaCl solution (20 mL), dried over anhydrous MgSO₄, filtered and evaporated to dryness *in vacuo.* The crude reaction mixture was purified by an automated flash chromatography system using a Heptane / EtOAc gradient (from 100% Heptane to 60% EtOAc in 40 min, 25 mL/min) to determine the yield of the desired product dimethyl methylenebis(6-methoxy-3,1-phenylene) biscarbonate and intermediate 5-(chloromethyl)-2-methoxyphenyl methyl carbonate.

### Intermediate: 5-(chloromethyl)-2-methoxyphenyl methyl carbonate

Colorless oil, ¹H NMR (400 MHz, CDCl₃): δ 7.24 (d, *J* = 8.4, 2.2 Hz, 2H), 7.18 (d, *J =* 2.2 Hz, 2H), 6.95 (d, *J =* 8.4 Hz, 1H), 4.54 (s, 2H), 3.91 (s, 3H), 3.86 (s, 3H) ppm. ¹³C NMR (101 MHz, CDCl₃): δ 153.9 (C), 151.5 (C), 140.2 (C), 130.3 (C), 127.5 (CH), 123.0 (CH), 112.7 (CH), 56.2 (CH₃), 55.7 (CH₃), 45.7 (CH₂) ppm.

**Table 1.**

| Exam ple | Type | 2-Methoxy phenyl methyl carbonate (equiv) | Dimethoxymethane (equiv) | Chloro sulfonic acid (equiv) | Temp (°C) | Time (h) | Yield intermediate (%) | Yield biscarbonate (%) |
|---|---|---|---|---|---|---|---|---|
| 1 | Comparative | 1.0 | 1.1 | 1.1 | -10 | 2 | 27 | 48 |
| 2 | Comparative | 1.0 | 1.1 | 1.1 | 0 | 2 | 43 | 53 |
| 3 | Comparative | 2.0 | 1.1 | 1.1 | 0 | 2 | 9 | 39 |
| 4 | Comparative | 1.0 | 1.1 | / | 0 | 2 | 0 | 0 |

The reaction of 2-methoxyphenyl methyl carbonate with dimethoxymethane and chlorosulfonic acid to give dimethyl methylenebis(6-methoxy-3,1-phenylene) biscarbonate was studied as model reaction for the optimization (Table ). Often the intermediate 5-(chloromethyl)-2-methoxyphenyl methyl carbonate was also observed. When conditions of Zhang and coworkers were applied, interestingly the desired biscarbonate was formed as major compound (example 1), although the authors claim no biscarbonate formation for their evaluated substrates. Raising the premix temperature to 0 °C delivered more chloromethylated intermediate (example 2). In the absence of chlorosulfonic acid, no reaction occurred (example 4).

### Screening of Lewis acids

### General Procedure 3:

An oven dried pressure vial of 10 mL equipped with a stir bar, was charged with the indicated Lewis acid (0.1 mmol, 10 mol%) and chlorosulfonic acid (73 µL, 1.1 mmol) under inert atmosphere. The vial was cooled to 0 °C, followed by dropwise addition of dimethoxymethane (97 µL, 1.1 mmol). After stirring for 30 minutes, 2-methoxyphenyl methyl carbonate (182 mg, 1.0 mmol) was slowly added neat into the reaction mixture. The mixture was stirred at 0 °C for 2 h under N₂ or air, followed by the indicated temperature for another 2 h before it was quenched by the addition of water (8 mL).

*Workup and analysis:* After extraction with EtOAc (20 mL), the organic phase was washed with saturated aqueous NaCl solution (20 mL), dried over anhydrous MgSO₄, filtered and evaporated to dryness *in vacuo.* Ethylene carbonate was added as internal standard and everything was dissolved in CDCl₃. A ¹H NMR spectrum was recorded and signals were integrated versus the internal standard to determine the yield of the desired biscarbonate and intermediate.

**Table 2.**

| Example | Type | Lewis acid | Atm | Temp after 2 h (°C) | Time (h) | Yield intermediate (%) | Yield biscarbonate (%) |
|---|---|---|---|---|---|---|---|
| 1 | Comparative | ZnCl₂ | N₂ | 0 | 2 | 43 | 53 |
| 2 | Comparative | TiCl₄ | N₂ | 0 | 2 | 27 | 63 |
| 3 | Comparative | TiCl₄ | N₂ | 0 | 4 | 27 | 59 |
| 4 | Comparative | FeBr₃ | N₂ | 0 | 2 | 9 | trace |
| 5 | Comparative | FeCl₃ | N₂ | 0 | 2 | trace | trace |
| 6 | Comparative | FeCl₃.6H₂O | Air | 0 | 4 | 25 | 74 |
| 7 | Comparative | FeCl₃.6H₂O | Air | 30 | 4 | 12 | 87 |
| 8 | Comparative | FeCl₃.6H₂O | Air | 0 | 7 | 11 | 83 |
| 9 | Reference | / | Air | 0 | 2 | 16 | 81 |
| 10^{[a]} | Reference | / | Air | 0 | 2 | 12 | 84 |

| | | | | | | | |
|---|---|---|---|---|---|---|---|
| [a] New vial and stir bar have been used. | | | | | | | |

Subsequently, different Lewis acids were evaluated for the coupling of 2-methoxyphenyl methyl carbonate, dimethoxymethane and chlorosulfonic acid (Table ). Lewis acids such as TiCl₄ or FeCl₃·6H₂O were also able to promote the desired transformation and show a better selectivity towards the biscarbonate. Interestingly, a control reaction revealed that the biscarbonate was also formed in the absence of a Lewis acid (example 9). Performing the reaction in a new vial and with a new stir bar indicated that the reaction is reproducible and no trace metals were involved as catalyst for this transformation (example 10). Raising the temperature after 2 h from 0 °C (required for the stability of the *in situ* generated MOMCl) to 30 °C, improved the yield of the biscarbonate (examples 6-7).

### Screening in absence of Lewis acid

### Solvent screening

### Synthetic Procedure:

An oven dried pressure vial of 10 mL equipped with a stir bar, was charged with chlorosulfonic acid (73 µL, 1.1 mmol) under inert atmosphere. The vial was cooled to 0 °C, followed by dropwise addition of dimethoxymethane (97 µL, 1.1 mmol). After stirring for 30 minutes, 2-methoxyphenyl methyl carbonate (182 mg, 1.0 mmol) dissolved in the indicated solvent (dry, 1 mL) was slowly added into the reaction mixture. The mixture was stirred at 0 °C for 2 h, followed by 2 h at 30 °C before it was quenched by the addition of water (8 mL). The workup and analysis is done as described in the general procedure 3.

**Table 3.**

| Example | Type | Solvent | Yield intermediate (%) | Yield biscarbonate (%) |
|---|---|---|---|---|
| 1 | Reference | Neat | 8 | 78 |
| 2 | Reference | Dichloromethane (DCM) | 7 | 78 |
| 3 | Comparative | Methyl ethyl ketone (MEK) | 0 | 0 |
| 4 | Comparative | Methanol (MeOH) | 0 | 0 |
| 5 | Comparative | Cyclopentyl methyl ether (CPME) | 0 | 0 |

Four different solvents were evaluated for the coupling of 2-methoxyphenyl methyl carbonate, dimethoxymethane and chlorosulfonic acid (Table 3). With a halogenated solvent such as DCM the desired biscarbonate was delivered. Moreover, this halogenated solvent also helps for the solubility of the biscarbonate (example 2). It can be seen that the addition of DCM to 2-methoxyphenyl methyl carbonate and not yet to the premix of dimethoxymethane and chlorosulfonic acid is beneficial.

### Addition order and setup

### Synthetic Procedure:

An oven dried vial of 10 mL equipped with a stir bar, was charged at 0 °C with two of the following reactants according to Table 4: chlorosulfonic acid (74 µL, 1.1 mmol), dimethoxymethane (97 µL, 1.1 mmol) or 2-methoxyphenyl methyl carbonate (182 mg, 1.0 mmol) under the indicated atmosphere. After 30 minutes, the third reactant was slowly added neat into the reaction mixture. The vial was equipped with a CaCl₂ tube and the mixture was stirred for 2 h at 0 °C, followed by 2 h at 30 °C before it was quenched by the addition of water (8 mL). The workup and analysis is done as described in the general procedure 3.

**Table 4.**

| Example | Type | Addition order^{[a]} | Vial | Atm | Yield intermediate (%) | Yield biscarbonate (%) |
|---|---|---|---|---|---|---|
| 1 | Reference | Mixture of **B/C** added to **A** | Open | N₂ | 0 | 87 |
| 2 | Comparative | Mixture of **A/B** added to **C** | Open | N₂ | 0 | 0 |
| 3 | Comparative | Mixture of **A/C** added to **B** | Open | N₂ | 0 | 0 |
| 4 | Reference | Mixture of **B/C** added to **A** | Closed | N₂ | 33 | 66 |
| 5 | Reference | Mixture of **B/C** added to **A** | Open | Air | 7 | 78 |

| | | | | | | |
|---|---|---|---|---|---|---|
| ^{[a]} A = 2-methoxyphenyl methyl carbonate, B = dimethoxymethane, C = chlorosulfonic acid. | | | | | | |

The addition order of 2-methoxyphenyl methyl carbonate, dimethoxymethane and chlorosulfonic acid was analyzed (Table 4, examples 1-3). It was found that only when the mixture as obtained in process step (a) is added to the carbonate, the desired reaction takes place. Performing the reaction under inert atmosphere, but in open setup seemed to deliver the best results for the yield of the desired biscarbonate (examples 1, 4-5).

### Reactant ratio screening

### Synthetic Procedure:

An oven dried pressure vial of 10 mL equipped with a stir bar, was charged with chlorosulfonic acid under inert atmosphere. The vial was cooled to 0 °C, followed by dropwise addition of dimethoxymethane. After stirring for 30 minutes, 2-methoxyphenyl methyl carbonate (182 mg, 1.0 mmol) dissolved in DCM (dry, 1 mL) was slowly added into the reaction mixture together with a possible additive. The mixture was stirred at 0 °C for 2 h, followed by 2 h at the indicated temperature before it was quenched by the addition of water (8 mL). The workup and analysis is done as described in general procedure 3.

**Table 5.**

| Exam ple | Type | 2-Methoxyphenyl methyl carbonate (equiv) | Dimethoxymethane (equiv) | Chlorosulfonic acid (equiv) | Additive (equiv) | Temp after 2 h (°C) | Yield intermediate (%) | Yield biscarbo nate (%) |
|---|---|---|---|---|---|---|---|---|
| 1 | Reference | 1.0 | 1.0 | 1.0 | / | 30 | 29 | 65 |
| 2 | Reference | 1.0 | 1.1 | 1.1 | / | 30 | 7 | 79 |
| 3 | Reference | 1.0 | 1.1 | 1.1 | / | 50 | 0 | 14 |
| 4 | Reference | 1.0 | 2.0 | 2.0 | / | 30 | 36 | 52 |
| 5 | Reference | 2.0 | 1.0 | 1.0 | / | 30 | 10 | 37 |
| 6 | Reference | 2.0 | 1.0 | 1.0 | H₂SO₄ (1.0) | 30 | 0 | 82 |
| 7 | Reference | 2.0 | 1.0 | 1.0 | HCl (4 M, 1.0) | 30 | 0 | 21 |
| 8 | Reference | 2.0 | 1.0 | 2.0 | / | 30 | 17 | 75 |
| 9 | Reference | 2.2 | 1.0 | 2.0 | / | 30 | 0 | 94 |
| 10 | Reference | 2.2 | 1.0 | 1.5 | / | 30 | 0 | 81 |

The reactant ratio between 2-methoxyphenyl methyl carbonate, dimethoxymethane and chlorosulfonic was evaluated (Table 5). Two equivalents of chlorosulfonic acid seem beneficial for the yield of the desired biscarbonate (examples 8-10), where the second equivalent acts as proton source (Brönsted acid). This second equivalent could also be replaced by sulfuric acid (example 6). A higher reaction temperature does not seem to be preferred for this transformation (example 3).

### Reaction time evaluation

### Synthetic Procedure:

An oven dried pressure vial of 10 mL equipped with a stir bar, was charged with chlorosulfonic acid (133 µL, 2.0 mmol) under inert atmosphere. The vial was cooled to 0 °C, followed by dropwise addition of dimethoxymethane (88 µL, 1.0 mmol). After the indicated premix time, 2-methoxyphenyl methyl carbonate (401 mg, 2.2 mmol) dissolved in DCM (dry, 1 mL) was slowly added into the reaction mixture. The mixture was first stirred at 0 °C, followed by 30 °C for the indicated time before it was quenched by the addition of water (8 mL). The workup and analysis is done as described in general procedure 3.

**Table 6.**

| Example | Type | Premix time (min) | Time at 0 °C (h) | Time at 30 °C (h) | Yield intermediate (%) | Yield biscarbonate (%) |
|---|---|---|---|---|---|---|
| 1 | Reference | 30 | 0.5 | 0 | 17 | 59 |
| 2 | Reference | 30 | 1 | 0 | 19 | 70 |
| 3 | Reference | 30 | 2 | 0 | 4 | 87 |
| 4 | Reference | 30 | 2 | 1 | 0 | 95 |
| 5 | Reference | 30 | 2 | 2 | 0 | 94 |
| 6 | Reference | 10 | 2 | 2 | 0 | 93 |

The reaction time was evaluated for the coupling between 2-methoxyphenyl methyl carbonate, dimethoxymethane and chlorosulfonic (Table 6). After 3 h the reaction reached complete conversion (example 4). In addition, the premix time was reduced to 10 minutes without loss in yield (example 6).

### Reaction temperature evaluation

### Synthetic Procedure:

An oven dried pressure vial of 10 mL equipped with a stir bar, was charged with chlorosulfonic acid (133 µL, 2.0 mmol) under inert atmosphere. The vial was stirred at the first indicated temperature, followed by dropwise addition of dimethoxymethane (88 µL, 1.0 mmol). After 10 minutes of premixing, 2-methoxyphenyl methyl carbonate (401 mg, 2.2 mmol) dissolved in DCM (dry, 2 mL) was slowly added into the reaction mixture. The mixture was stirred at further for 2 h at the first indicated temperature (temperature 1), followed for 2 h at the second indicated temperature (temperature 2) before it was quenched by the addition of water (8 mL). The workup and analysis is done as described in general procedure 3.

**Table 7.**

| Example | Type | Temperature 1 (°C) | Temperature 2 (°C) | Yield intermediate (%) | Yield biscarbonate (%) |
|---|---|---|---|---|---|
| 1 | Reference | 0.0 | 30.0 | 0 | 94 |
| 2 | Reference | 0.0 | 20.0 | 10 | 83 |
| 3 | Reference | 0.0 | 0.0 | 19 | 68 |
| 4 | Reference | 5.0 | 30.0 | 0 | 95 |
| 5 | Reference | 10.0 | 30.0 | 0 | 51 |
| 6 | Reference | 30.0 | 30.0 | 3 | 52 |

The reaction temperature was found to be optimizable for the two steps of the reaction (Table 7). As the addition of 2-methoxyphenyl methyl carbonate to premixed chlorosulfonic acid and dimethoxymethane is exothermic, cooling is beneficial. Moreover, decomposition starts to occur at 30 °C and a lower yield of the desired biscarbonate is obtained (compare examples 1 and 6). It was beneficial for the formation of the biscarbonate to raise the temperature after 2 hours to 30 °C to achieve full conversion in 4 hours (example 1). A temperature of 30 °C was selected over 20 °C (example 2) as this can be reliably repeated in a laboratory *via* an oil bath. The temperature of the first step is preferably below five degrees (example 5).

### Preliminary evaluation of the reaction scope

### Acetal and ketal evaluation

### Synthetic procedure:

An oven dried pressure vial of 10 mL equipped with a stir bar, was charged with chlorosulfonic acid under inert atmosphere. The vial was cooled to 0 °C, followed by dropwise addition of the indicated ketal or acetal. After stirring for 30 minutes, 2-methoxyphenyl methyl carbonate (1 mmol) dissolved in DCM (dry, 1 mL) was slowly added into the reaction mixture. The vial was capped and the mixture was stirred at 0 °C for 2 h, followed by 2 h at room temperature before it was quenched by the addition of water (8 mL). The workup and analysis is done as described in general procedure 3.

**Table 8.**

| Example | Type | Acetal/Ketal | Ratio 2-methoxyphenyl methyl carbonate : dimethoxymethane : chlorosulfonic acid | Yield intermediate (%) | Yield biscarbonate (%) |
|---|---|---|---|---|---|
| 1 | Reference | 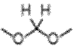 | 1.0 : 1.1 : 1.1 | 16 | 76 |
| 2 | Reference | | 2.1 : 1.0 : 2.0 | 0 | 94 |
| 3 | Comparative | 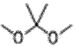 | 1.0 : 1.1 : 1.1 | 0 | 0 |
| 4 | Reference | 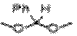 | 1.0 : 1.1 : 1.1 | 39 | 31 |
| 5 | Reference | | 2.1 : 1.0 : 2.0 | 0 | 70 |
| 6 | Comparative | 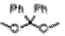 | 1.0 : 1.1 : 1.1 | 0 | 0 |
| 7 | Reference | 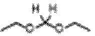 | 1.0 : 1.1 : 1.1 | 16 | 78 |
| 8 | Reference | | 2.1 : 1.0 : 2.0 | 3 | 94 |
| 9 | Comparative | 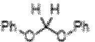 | 1.0 : 1.1 : 1.1 | 0 | 0 |

addition of dimethoxymethane (97 µL, 1.1 mmol). After stirring for 30 minutes, 2-methoxyphenyl methyl carbonate (182 mg, 1.0 mmol) dissolved in DCM (dry, 1 mL) was slowly added into the reaction mixture. The mixture was stirred at 0 °C for 2 h, followed by 2 h at room temperature before it was quenched by the addition of water (2 mL). The workup and analysis is done as described in general procedure 3.

**Table 9.**

| Example | Type | Reactant | Yield intermediate (%) | Yield biscarbonate (%) |
|---|---|---|---|---|
| 1 | Reference | chlorosulfonic acid | 16 | 76 |
| 2 | Comparative | sulfuric acid | 0 | 0 |
| 3 | Comparative | sulfuryl chloride | 0 | 0 |
| 4 | Comparative | acetyl chloride | 0 | 0 |
| 5 | Comparative | HCl (4 M in dioxane) | 0 | 0 |

Several reactants were evaluated as alternatives for chlorosulfonic acid for the biscarbonate synthesis from 2-methoxyphenyl methyl carbonate and dimethoxymethane (Table 9).

However, the tested alternatives seemed to be unable to promote this transformation under the given conditions and both starting materials were recovered (examples 2-4). Only with hydrochloric acid decomposition of 2-methoxyphenyl methyl carbonate was observed.

### Chloromethyl methyl ether (MOMCl) as alternative coupling agent?

### Synthetic Procedure:

An oven dried pressure vial of 10 mL equipped with a stir bar, was charged with an additive under inert atmosphere. The vial was cooled to 0 °C, followed by dropwise addition of chloromethyl methyl ether (76 µL, 1.0 mmol). 2-Methoxyphenyl methyl carbonate (182 mg, 1.0 mmol) dissolved in DCM (dry, 1 mL) was slowly added into the reaction mixture. The mixture was stirred at 0 °C for 2 h, followed by 2 h at 30 °C, before it was quenched by the addition of water (2 mL). The workup and analysis is done as described in general procedure 3.

**Table 10.**

| Example | Type | Additive (equiv) | Yield intermediate (%) | Yield biscarbonate (%) |
|---|---|---|---|---|
| 1 | Comparative | / | 0 | 0 |
| 2 | Comparative | ZnCl₂ (0.1) | 35 | 15 |
| 3 | Reference | HSO₃Cl (1.0) | 11 | 82 |

Chloromethyl methyl ether (MOMCl) is probably *is situ* formed in our transformation, while premixing dimethoxymethane and chlorosulfonic acid. MOMCl was therefore also examined as alternative coupling agent of 2-methoxyphenyl methyl carbonate (Table 10). An additive seems to be needed for the activation of MOMCl. Pleasingly with 1.0 equiv of chlorosulfonic acid 82% of dimethyl methylenebis(6-methoxy-3,1-phenylene) biscarbonate was obtained.

### Methyl carbonates

### General procedure 4:

An oven dried microwave vial of 10 mL equipped with a stir bar, was charged with chlorosulfonic acid (133 µL, 2.0 mmol) under inert atmosphere (e.g. *via* a glovebox). The vial was cooled to 0 °C, followed by dropwise addition of dimethoxymethane (88 µL, 1.0 mmol). After stirring for 10 minutes, the methyl carbonate (2.2 mmol) dissolved in DCM (dry, 1 mL) was slowly added into the reaction mixture. The resulting mixture was stirred for 2 hours at 0 °C. Subsequently, it was stirred at room temperature, before it was quenched by the addition of water (2 mL). After extraction with EtOAc (20 mL), the organic phase was washed with saturated aqueous NaCl solution (20 mL), dried over anhydrous MgSO₄, filtered and evaporated to dryness *in vacuo.* Isolation was done as described.

### REFERENCE EXAMPLE 1 - Biscarbonate formation from 2-methoxyphenyl methyl carbonate

General procedure 4 was applied using 2-methoxyphenyl methyl carbonate (401 mg, 2.2 mmol). The product was purified by an automated flash chromatography system using a Heptane / EtOAc gradient (from 100% Heptane to 60% EtOAc in 40 min, 25 mL/min). Dimethyl methylenebis(6-methoxy-3,1-phenylene) biscarbonate was obtained in 87% (164 mg) yield.

White oil, ¹H NMR (400 MHz, CDCl₃): δ 6.99 (d, *J* = 8.4, 2.1 Hz, 2H), 6.94 (d, *J =* 2.0 Hz, 2H), 6.89 (d, *J =* 8.4 Hz, 1H), 3.88 (s, 6H), 2.86 (s, 2H), 3.82 (s, 6H) ppm. ¹³C NMR (101 MHz, CDCl₃): δ 154.0 (C), 149.7 (C), 133.5 (C), 127.3 (CH), 122.9 (CH), 112.7 (CH), 56.1 (CH₃), 55.5 (CH₃), 39.8 (CH₂) ppm. HRMS (ESI) for C₁₉H₂₀O₈Na [M+Na]⁺ calcd. 399.1050, found 399.1063.

### REFERENCE EXAMPLE 2 - Biscarbonate formation from 2-methoxy-4-propylphenyl methyl carbonate

General procedure 4 was applied using 2-methoxy-4-propylphenyl methyl carbonate (224 mg, 1.0 mmol) and FeCl₃·6H₂O (27 mg, 10 mol%). The product was purified by an automated flash chromatography system using a Heptane / EtOAc gradient (from 100% Heptane to 70% EtOAc in 30 min, 25 mL/min). Dimethyl methylenebis(6-methoxy-4-propyl-3,1-phenylene) biscarbonate was obtained in 23% (52 mg) yield.

White solid, m.p. = 99-100 °C, ¹H NMR (400 MHz, CDCl₃): δ 6.80 (s, 2H), 6.64 (s, 2H), 3.86 (s, 6H), 3.84 (s, 6H), 3.82 (s, 2H), 2.53 - 2.49 (m, 4H), 1.61 - 1.55 (m, 4H), 0.96 (t, *J =* 7.3 Hz, 6H) ppm. ¹³C NMR (101 MHz, CDCl₃): δ 154.1 (C), 149.4 (C), 139.8 (C), 138.2 (C), 130.6 (C), 123.5 (CH), 113.9 (CH), 56.2 (CH₃), 55.5 (CH₃), 35.2 (CH₂), 34.1 (CH₂), 24.0 (CH₂), 14.3 (CH₃) ppm. HRMS (ESI) for C₂₅H₃₂O₈Na [M+Na]⁺ calcd. 483.1989, found 483.2010.

A triscarbonate [((4-methoxy-5-((methoxycarbonyl)oxy)-2-propyl-1,3-phenylene)bis (methylene))bis(6-methoxy-4-propyl-3,1-phenylene) dimethyl bis(carbonate)] was also isolated during the synthesis in 26% (60 mg) yield. The mass was confirmed by HRMS analysis. HRMS(ESI) for C₃₈H₄₈O₁₂Na [M+Na]⁺ calcd. 719.3038, found 709.3064.

5-(Chloromethyl)-2-methoxy-4-propylphenyl methyl carbonate (the intermediate) was isolated in 21% (58 mg) yield. Colorless oil, ¹H NMR (400 MHz, CDCl₃): δ 7.11 (s, 1H), 6.79 (s, 1H), 4.56 (s, 2H), 3.90 (s, 3H), 3.85 (s, 3H), 3.02 - 2.50 (m, 2H), 1.81 - 1.60 (m, 2H), 1.02 (t, *J =* 7.3 Hz, 6H) ppm. ¹³C NMR (101 MHz, CDCl₃): δ 154.1 (C), 151.4 (C), 141.1 (C), 127.6 (C), 124.2 (CH), 113.9 (CH), 56.1 (CH₃), 55.7 (CH₃), 43.8 (CH₂), 34.7 (CH₂), 24.5 (CH₂), 14.3 (CH₃) ppm. This chloride compound not stable to have accurate mass. The corresponding alcohol is detected. HRMS (ESI) for C₁₃H₁₈O₅Na [M+Na]⁺ calcd. 277.1046, found 277.1035.

### REFERENCE EXAMPLE 3 - Biscarbonate formation from 2-tert-butyl-4-methoxyphenyl methyl carbonate

General procedure 4 was applied using 2-tert-butyl-4-methoxyphenyl methyl carbonate (524 mg, 2.2 mmol). The product was purified by an automated flash chromatography system using a Heptane / EtOAc gradient (from 100% Heptane to 50% EtOAc in 35 min, 25 mL/min). Dimethyl (methylenebis(6-*tert*-buyl-4-methoxy-3,1-phenylene)) biscarbonate was obtained in 59% (144 mg) yield.

White oil, ¹H NMR (400 MHz, CDCl₃): δ 6.86 (s, 2H), 6.82 (s, 2H), 3.88 (s, 6H), 3.84 (s, 2H), 3.81 (s, 6H), 1.35 (s, 18H) ppm. ¹³C NMR (101 MHz, CDCl₃): δ 155.2 (C), 154.8 (C), 143.0 (C), 139.6 (C), 127.4 (C), 125.6 (CH), 109.3 (CH), 55.8 (CH₃), 55.3 (CH₃), 34.8 (C), 30.4 (CH₃), 29.3 (CH₂) ppm. HRMS (ESI) for C₂₇H₃₆O₈K [M+K]⁺ calcd. 527.2042, found 527.2019.

### REFERENCE EXAMPLE 4 - Oligomerization with 3-methoxyphenyl methyl carbonate

General procedure 4 was applied using 3-methoxyphenyl methyl carbonate (200 mg, 1.1 mmol), dimethoxymethane (44 µL, 0.5 mmol) and chlorosulfonic acid (67 µL, 1.0 mmol). An off-white solid was obtained, where the formation of oligomers was proven *via* nano-mass electrospray analysis. Repeating unit (n) has an m/z value of 194.0, with analytes detected as sodium adduct from 399.8 (n = 1, biscarbonate) until 2727.5 (n = 13).

### REFERENCE EXAMPLE 5 - Oligomerization with methyl phenyl carbonate

General procedure 4 was applied using methyl phenyl carbonate (220 µL, 2.2 mmol), dimethoxymethane (88 µL, 1.0 mmol) and chlorosulfonic acid (133 µL, 2.0 mmol). A white sticky compound was obtained, where the formation of oligomers was proven *via* nano-mass electrospray analysis. Repeating unit (n) has an m/z value of 164.0, with analytes detected as sodium adduct from 329.8 (n = 1, biscarbonate) until 1487.4 (n = 8).

### General procedure 5:

An oven dried microwave vial of 10 mL equipped with a stir bar, was charged with chlorosulfonic acid. The vial was cooled to 0 °C, followed by dropwise addition of dimethoxymethane. After stirring for 30 minutes, the aryl carbonate (1.0 mmol) dissolved in DCM (dry, 1 mL) was slowly added into the reaction mixture. The resulting solution was stirred at 0 °C for 2 h before it was transferred to room temperature. After 4 h of reaction time, the mixture was quenched by the addition of water. After extraction with DCM (15 mL), the organic phase was washed with water (20 mL) and with saturated aqueous NaCl solution (20 mL) and evaporated to dryness *in vacuo.* The oligomeric mixture was precipitated *via* addition in MeOH. The precipitation was filtered off over a paper filter and dried *in vacuo.*

### INVENTIVE EXAMPLE 6 - Oligomerization with guaiacol carbonate

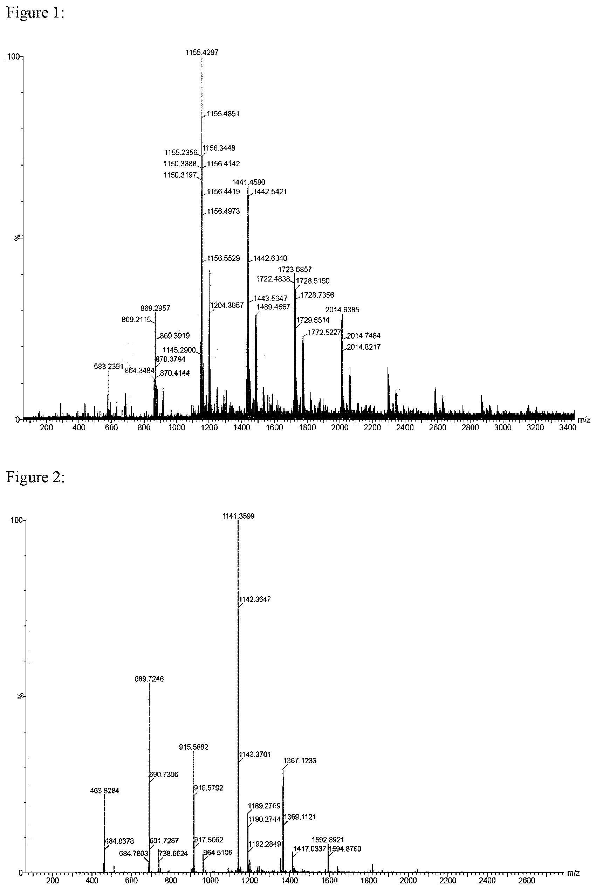

General procedure 5 was applied using guaiacol carbonate (274 mg, 1.0 mmol), dimethoxymethane (97 µL, 1.0 mmol) and chlorosulfonic acid (73 µL, 1.1 mmol). A white solid was obtained, where the formation of oligomers was proven *via* nano-mass electrospray analysis (see Figure 1). Repeating unit (n) had a m/z value of 286.1, with analytes detected as sodium adduct from 583.2 (n = 1, biscarbonate) until 2871.8 (n = 9). In addition, the chloromethylated oligomer intermediates were also visible in the mass spectrum and the analytes detected as sodium adduct from 631.1 (n = 1, chloromethylated biscarbonate) until 2633.7 (n = 8). GPC analysis confirmed the formation of oligomers with number average molecular weight of Mₙ = 884.4 g/mol and weight average molecular weight of M_{w} = 3270.3 g/mol. Remark: larger oligomers were probably not soluble as a cloudy solution was obtained in DCM, therefore the sample was filtered prior to analysis.

### INVENTIVE EXAMPLE 7 - Oligomerization with diphenyl carbonate

General procedure 5 was applied using diphenyl carbonate (471 mg, 2.2 mmol), dimethoxymethane (88 µL, 1.0 mmol) and chlorosulfonic acid (133 µL, 2.0 mmol). A white solid was obtained, where the formation of oligomers was proven *via* nano-mass electrospray analysis (see Figure 2). Repeating unit (n) had a m/z value of 226.1, with analytes detected as sodium adduct from 463.1 (n = 1, biscarbonate) until 2045.5 (n = 8). In addition also the chloromethylated oligomer intermediates were visible in the mass spectrum and analytes were detected as sodium adduct from 511.7 (n = 1, chloromethylated biscarbonate) until 1867.5 (n = 7).

### INVENTIVE EXAMPLE 8 - Oligomerization with bis(2-methoxy-4-propylphenyl) carbonate

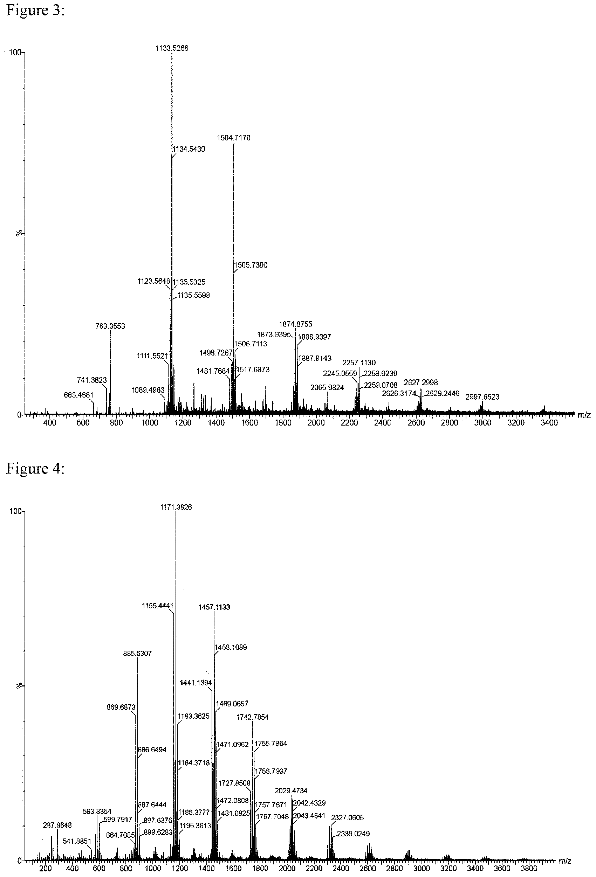

General procedure 5 was applied using bis(2-methoxy-4-propylphenyl) carbonate (358 mg, 1.0 mmol), dimethoxymethane (97 µL, 1.1 mmol) and chlorosulfonic acid (73 µL, 1.1 mmol). An off-white solid was obtained, where the formation of oligomers was proven *via* nano-mass electrospray analysis (see Figure 4). Repeating unit (n) had an m/z value of 286.1, with analytes detected as sodium adduct from 728.3 (n = 1, biscarbonate) until 3367.9 (n = 8). Interestingly, the mass suggested that HCl elimination has occurred from the end group of all oligomers. The analytes corresponding to HCl elimination of both end groups were also visible in the mass spectrum. GPC analysis confirmed the formation of oligomers with number average molecular weight of Mₙ = 2386 g/mol and weight average molecular weight of M_{w} = 11248 g/mol.

### INVENTIVE EXAMPLE 9 - Oligomerization with bis(3-methoxyphenyl) carbonate

General procedure 6 was applied using bis(3-methoxyphenyl) carbonate (274 mg, 1.0 mmol). A white solid was obtained, where the formation of oligomers was proven *via* nano-mass electrospray analysis (see Figure 4), although not everything dissolved in DMSO (the solvent for electrospray analysis). The repeating unit (n) had a m/z value of 286.1, with analytes detected as sodium adduct from 583.1 (n = 1, biscarbonate) until 3157.9 (n = 10). The potassium adducts were also visible in the mass spectrum and the analytes detected from 599.8 (n = 1) until 2887.8 (n = 9). In addition, the potassium adducts from the ring-closed oligomers were also detected from 897.6 (n = 2) until 2613.6 (n = 8). GPC analysis confirmed the formation of oligomers, although a large fraction is not soluble in DCM, with number average molecular weight of Mₙ = 643 g/mol and weight average molecular weight of M_{w} = 1582 g/mol.

### INVENTIVE EXAMPLE 10 - Oligomerization with bis(2-(tert-butyl)-4-methoxyphenyl) carbonate

General procedure 6 was applied using bis(2-(tert-butyl)-4-methoxyphenyl) carbonate (386 mg, 1.0 mmol). A white solid was obtained, where the formation of oligomers was proven *via* nano-mass electrospray analysis, although not everything dissolved in DMSO (the solvent for electrospray analysis). The repeating unit (n) had a m/z value of 286.1, with analytes detected as sodium adduct from 583.1 (n = 1, biscarbonate) until 3157.9 (n = 10). The potassium adducts were also visible in the mass spectrum and the analytes detected from 599.8 (n = 1) until 2887.8 (n = 9). In addition, the potassium adducts from the ring-closed oligomers were also detected from 897.6 (n = 3) until 2613.6 (n = 9). GPC analysis confirmed the formation of oligomers, with number average molecular weight of Mₙ = 830 g/mol and weight average molecular weight of M_{w} = 4469 g/mol.

Several substituted methyl carbonates were examined as alternative coupling partner in the reaction according to the present invention. Pleasingly, 2-methoxy-4-propylphenyl methyl carbonate, a fully biorenewable building block, and 2-tert-butyl-4-methoxyphenyl methyl carbonate delivered the desired biscarbonates. In both cases also a triscarbonate was isolated due to the positive inductive effect of the substituent. With 3-methoxyphenyl methyl carbonate and methyl phenyl carbonate oligomer formation was already observed. This methodology was also applied to aryl carbonates (guaiacol carbonate, diphenyl carbonate, bis(2-methoxy-4-propylphenyl) carbonate, bis(3-methoxyphenyl) carbonate, bis(2-(tert-butyl)-4-methoxyphenyl) carbonate) delivering a range of oligomers. Besides the expected oligomers, also the chloromethyl intermediates and ring closed oligomers were observed (chain stops). Pleasingly, the methoxy-substituent was tolerated on different positions of the aromatic carbonate (i.e., *meta-* and *para-* relative to the carbonate moiety) and even without substituent (i.e. diphenyl carbonate) oligomer formation is observed.

## Claims

1. A process for preparing a polycarbonate of formula (1) using electrophilic aromatic substitution, 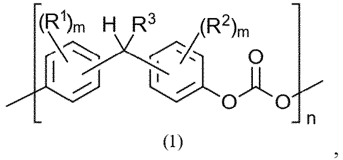
wherein in formula (1) each of R¹ and R² independently represents a substituent that is capable of activating the aromatic ring which it substitutes by a mesomeric effect and/or an inductive effect,
R³ represents a hydrogen atom, an aryl group or an alkyl group having 1 to 6 carbon atoms,
each m independently is 0 to 4 and
n is the number of repeating units, preferably 6 to 60,
comprising the steps of
(a) reacting at least one compound of formula (2) with chlorosulfonic acid, wherein
at least one molar equivalent of chlorosulfonic acid with respect to the molar sum of compounds of formula (2) is used, 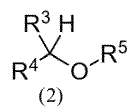
wherein in formula (2) R³ represents a hydrogen atom, an aryl group or an alkyl group having 1 to 6 carbon atoms and
R⁴ represents -O-R⁵ or a halogen atom and
R⁵ represent a linear alkyl group having 1 to 5 carbon atoms or R⁴ and R⁵ together form a cycle which may be interrupted by at least one oxygen or sulphur atom,
and
(b) adding a compound of formula (3) to the reaction mixture of process step (a), 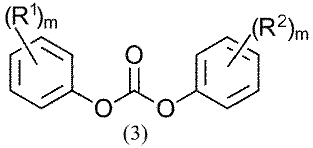
wherein in formula (3) each of R¹ and R² independently represents a substituent that is capable of activating the aromatic ring which it substitutes by a mesomeric effect and/or an inductive effect and each m independently is 0 to 4,
wherein either at least one halogenated solvent is added in process step (a) and/or (b) or no solvent is added at all to process step (a) and/or (b),
**characterized in that** no metal-based Lewis acid is used in process step (a) and/or (b).

2. The process according to claim 1, **characterized in that** the polycarbonate of formula (1) comprises a structure of formula (1a) 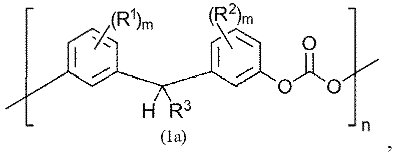
wherein in formula (1a) each of R¹ and R² independently represents a substituent that is capable of activating the aromatic ring which it substitutes by a mesomeric effect and/or an inductive effect,
R³ represents a hydrogen atom, an aryl group or an alkyl group having 1 to 6 carbon atoms,
each m independently is 0 to 4 and
n is the number of repeating units, preferably 6 to 60,
wherein in process step (b) the compound of formula (3) is added to the reaction mixture of process step (a), wherein each of R¹ and R² independently represents a substituent that is capable of activating the aromatic ring which it substitutes by a mesomeric effect and/or an inductive effect and each m independently is 0 to 4.

3. The process according to claim 2, **characterized in that** each of R¹ and R² in formula (1a) and (3) independently represents a substituent that is capable of directing an electrophile into the position at the aromatic ring which is *ortho-* or *meta-,* preferably *meta-* with respect to the carbonate group at the same aromatic ring.

4. The process according to one of claims 1 to 3, **characterized in that** m in formula (1) or (1a) and in formula (3) is 1 to 3.

5. The process according to one of claims 2 to 4, characterized that the polycarbonate of formula (1a) is represented by the polycarbonate of formula (1b) 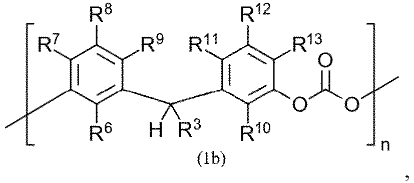
wherein in formula (1b) at least one of R⁶, R⁷, R⁸ and R⁹ is a hydrogen atom and at least one of R¹⁰, R¹¹, R¹² and R¹³ is a hydrogen atom with the proviso that at least one of R⁶, R⁷, R⁸ and R⁹ is not a hydrogen and at least one of R¹⁰, R¹¹, R¹² and R¹³ is not a hydrogen atom,
each of R⁶ and R¹⁰ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms,
each of R⁷ and R¹³ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms,
each of R⁸ and R¹² independently represent a hydrogen atom, -NO₂, -NR'₃⁺, -CF₃, -CCl₃, -C(=O)R' or -CN, wherein each R' independently represents an alkyl radical having 1 to 6 carbon atoms,
each of R⁹ and R¹¹ independently represents a hydrogen atom, -NHR', -NR", -OR', -SR', an alkyl radical having 1 to 6 carbon atoms, -F, -Cl, -Br or -I, wherein each R' independently represents an alkyl radical having 1 to 6 carbon atoms
and R³, m and n have the meanings as given with respect to formula (1a),
wherein in process step (b) a compound of formula (3b) is added to the reaction mixture of process step (a), 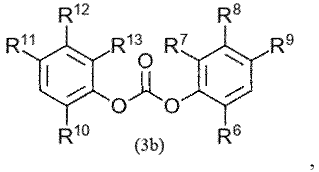
wherein R⁶ to R¹³ in formula (3b) have the meaning as given with respect to formula (1b).

6. The process according to claim 5, **characterized in that** each of R⁶, R⁸, R¹⁰ and R¹² represents a hydrogen atom.

7. The process according to any one of claims 5 or 6, **characterized in that** each of R⁷, R⁹, R¹¹ and R¹³ independently represents a hydrogen atom, -OCH₃, -OCH₂CH₃, -OCH₂CH₂CH₃, -OCH₂CH₂CH₂CH₃, -CH₃, -CH₂CH₃, -CH₂CH₂CH₃, -CH₂CH₂CH₂CH₃ or -C(CH₃)₃.

8. The process according to claim 5, **characterized in that** each of R⁶, R⁸, R¹⁰ and R¹² represents a hydrogen atom, each of R⁷ and R¹³ represents -OCH₃ and each of R⁹ and R¹¹ represents a hydrogen atom, -CH₂CH₂CH₃ or -C(CH₃)₃.

9. The process according to one of claims 1 to 8, **characterized in that** R³ represents a hydrogen atom or a phenyl group.

10. The process according to one of claims 1 to 9, **characterized in that** the polycarbonate of formula (1), formula (1a) or formula (1b) has a weight average molecular weight of 15000 g/mol to 40000 g/mol as determined via size exclusion chromatography.

11. The process according to any one of claims 1 to 10, **characterized in that** R⁴ in formula (2) represents -Cl, -Br, -O-CH₃ or -O-CH₂-CH₃.

12. The process according to any one of claims 1 to 11, **characterized in that** R⁵ in formula (2) represents -CH₃ or -CH₂-CH₃.

13. The process according to any one of claims 1 to 12, **characterized in that** the at least one halogenated solvent which is added to process step (a) and/or (b) is selected from the group consisting of dichloromethane, chloroform, trichloroethylene and chlorobenzene.

14. The process according to any one of claims 1 to 13, **characterized in that** the molar ratio of the compound of formula (2) to the chlorosulfonic acid in process step (a) is 1.0 to 2.5.

15. The process according to any one of claims 1 to 11, **characterized in that** the compound of formula (3) is added in process step (b) in a molar ratio with respect to the compound of formula (2) which has been provided in process step (a) of 0.8 to 2.0.

## Patentansprüche

1. Verfahren zur Herstellung eines Polycarbonats der Formel (1) mittels elektrophiler aromatischer Substitution, 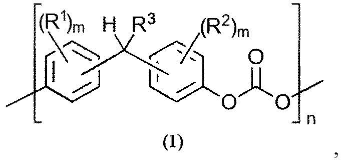
wobei in Formel (1) R¹ und R² jeweils unabhängig für einen Substituenten stehen, der in der Lage ist, den aromatischen Ring, den er substituiert, durch einen mesomeren Effekt und/oder einen induktive Effekt zu aktivieren,
R³ für ein Wasserstoffatom, eine Arylgruppe oder eine Alkylgruppe mit 1 bis 6 Kohlenstoffatomen steht,
m jeweils unabhängig 0 bis 4 ist und
n die Zahl der Wiederholungseinheiten, vorzugsweise 6 bis 60, ist,
umfassend die Schritte
(a) Umsetzen von mindestens einer Verbindung der Formel (2) mit Chlorsulfonsäure, wobei mindestens ein Moläquivalent Chlorsulfonsäure, bezogen auf die molare Summe von Verbindungen der Formel (2), verwendet wird, 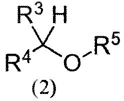
wobei in Formel (2) R³ für ein Wasserstoffatom, eine Arylgruppe oder eine Alkylgruppe mit 1 bis 6 Kohlenstoffatomen steht und
R⁴ für -O-R⁵ oder ein Halogenatom steht und
R⁵ für eine lineare Alkylgruppe mit 1 bis 5 Kohlenstoffatomen steht oder R⁴ und R⁵ zusammen einen Ring bilden, der durch mindestens ein Sauerstoff- oder Schwefelatom unterbrochen sein kann,
und
(b) Zugeben einer Verbindung der Formel (3) zu der Reaktionsmischung aus Verfahrensschritt (a), 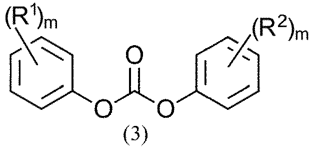
wobei in Formel (3) R¹ und R² jeweils unabhängig für einen Substituenten stehen, der in der Lage ist, den aromatischen Ring, den er substituiert, durch einen mesomeren Effekt und/oder einen induktive Effekt zu aktivieren, und m jeweils unabhängig 0 bis 4 ist,
wobei entweder mindestens ein halogeniertes Lösungsmittel in Verfahrensschritt (a) und/oder (b) zugegeben wird oder gar kein Lösungsmittel zu Verfahrensschritt (a) und/oder (b) zugegeben wird,
**dadurch gekennzeichnet, dass** in Verfahrensschritt (a) und/oder (b) keine Lewis-Säure auf Metallbasis verwendet wird.

2. Verfahren nach Anspruch 1, **dadurch gekennzeichnet, dass** das Polycarbonat der Formel (1) eine Struktur der Formel (1a) 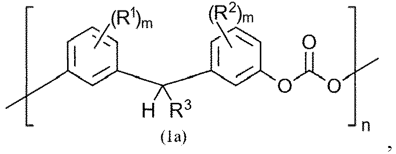
umfasst, wobei in Formel (1a) R¹ und R² jeweils unabhängig für einen Substituenten stehen, der in der Lage ist, den aromatischen Ring, den er substituiert, durch einen mesomeren Effekt und/oder einen induktive Effekt zu aktivieren,
R³ für ein Wasserstoffatom, eine Arylgruppe oder eine Alkylgruppe mit 1 bis 6 Kohlenstoffatomen steht,
m jeweils unabhängig 0 bis 4 ist und
n die Zahl der Wiederholungseinheiten, vorzugsweise 6 bis 60, ist,
wobei in Verfahrensschritt (b) die Verbindung der Formel (3) zu der Reaktionsmischung aus Verfahrensschritt (a) gegeben wird, wobei R¹ und R² jeweils unabhängig für einen Substituenten stehen, der in der Lage ist, den aromatischen Ring, den er substituiert, durch einen mesomeren Effekt und/oder einen induktive Effekt zu aktivieren, und m jeweils unabhängig 0 bis 4 ist.

3. Verfahren nach Anspruch 2, **dadurch gekennzeichnet, dass** R¹ und R² in Formel (1a) und (3) jeweils unabhängig für einen Substituenten stehen, der in der Lage ist, ein Elektrophil in die Position am aromatischen Ring zu dirigieren, die in ortho- oder meta-Stellung, vorzugsweise meta-Stellung, zu der Carbonatgruppe an demselben aromatischen Ring steht.

4. Verfahren nach einem der Ansprüche 1 bis 3, **dadurch gekennzeichnet, dass** m in Formel (1) oder (1a) und in Formel (3) 1 bis 3 ist.

5. Verfahren nach einem der Ansprüche 2 bis 4, **dadurch gekennzeichnet, dass** das Polycarbonat der Formel (1a) durch das Polycarbonat der Formel (1b) wiedergegeben wird: 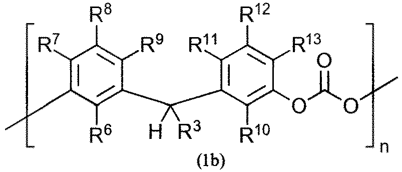
wobei in Formel (1b) mindestens eines von R⁶, R⁷, R⁸ und R⁹ ein Wasserstoffatom ist und mindestens eines von R¹⁰, R¹¹, R¹² und R¹³ ein Wasserstoffatom ist, mit der Maßgabe, dass mindestens eines von R⁶, R⁷, R⁸ und R⁹ kein Wasserstoff ist und mindestens eines von R¹⁰, R¹¹, R¹² und R¹³ kein Wasserstoffatom ist,
R⁶ und R¹⁰ jeweils unabhängig für ein Wasserstoffatom, - NHR', -NR", -OR', -SR', einen Alkylrest mit 1 bis 6 Kohlenstoffatomen, -F, -Cl, -Br oder -I stehen, wobei R' jeweils unabhängig für einen Alkylrest mit 1 bis 6 Kohlenstoffatomen steht,
R⁷ und R¹³ jeweils unabhängig für ein Wasserstoffatom, - NHR', -NR", -OR', -SR', einen Alkylrest mit 1 bis 6 Kohlenstoffatomen, -F, -Cl, -Br oder -I stehen, wobei R' jeweils unabhängig für einen Alkylrest mit 1 bis 6 Kohlenstoffatomen steht,
R⁸ und R¹² jeweils unabhängig für ein Wasserstoffatom, - NO₂, -NR'₃⁺, -CF₃, -CCl₃, -C(=O)R' oder -CN stehen, wobei R' jeweils unabhängig für einen Alkylrest mit 1 bis 6 Kohlenstoffatomen steht,
R⁹ und R¹¹ jeweils unabhängig für ein Wasserstoffatom, - NHR', -NR", -OR', -SR', einen Alkylrest mit 1 bis 6 Kohlenstoffatomen, -F, -Cl, -Br oder -I stehen, wobei R' jeweils unabhängig für einen Alkylrest mit 1 bis 6 Kohlenstoffatomen steht,
und R³, m und n die in Bezug auf Formel (1a) angegebenen Bedeutungen haben,
wobei in Verfahrensschritt (b) eine Verbindung der Formel (3b) zu der Reaktionsmischung aus Verfahrensschritt (a) gegeben wird, 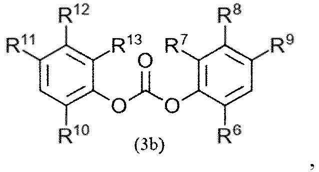
wobei R⁶ bis R¹³ in Formel (3b) die in Bezug auf Formel (1b) angegebene Bedeutung haben.

6. Verfahren nach Anspruch 5, **dadurch gekennzeichnet, dass** R⁶, R⁸, R¹⁰ und R¹² jeweils für ein Wasserstoffatom stehen.

7. Verfahren nach einem der Ansprüche 5 oder 6, **dadurch gekennzeichnet, dass** R⁷, R⁹, R¹¹ und R¹³ jeweils unabhängig für ein Wasserstoffatom, -OCH₃, -OCH₂CH₃, -OCH₂CH₂CH₃, - OCH₂CH₂CH₂CH₃, -CH₃, -CH₂CH₃, -CH₂CH₂CH₃, -CH₂CH₂CH₂CH₃ oder -C(CH₃)₃ stehen.

8. Verfahren nach Anspruch 5, **dadurch gekennzeichnet, dass** R⁶, R⁸, R¹⁰ und R¹² jeweils für ein Wasserstoffatom stehen, R⁷ und R¹³ jeweils für -OCH₃ stehen und R⁹ und R¹¹ jeweils für ein Wasserstoffatom, -CH₂CH₂CH₃ oder -C(CH₃)₃ stehen.

9. Verfahren nach einem der Ansprüche 1 bis 8, **dadurch gekennzeichnet, dass** R³ für ein Wasserstoffatom oder eine Phenylgruppe steht.

10. Verfahren nach einem der Ansprüche 1 bis 9, **dadurch gekennzeichnet, dass** das Polycarbonat der Formel (1), Formel (1a) oder Formel (1b) ein gewichtsmittleres Molekulargewicht von 15.000 g/mol bis 40.000 g/mol gemäß Bestimmung mittels Größenausschlusschromatographie aufweist.

11. Verfahren nach einem der Ansprüche 1 bis 10, **dadurch gekennzeichnet, dass** R⁴ in Formel (2) für -Cl, -Br, -O-CH₃ oder -O-CH₂-CH₃ steht.

12. Verfahren nach einem der Ansprüche 1 bis 11, **dadurch gekennzeichnet, dass** R⁵ in Formel (2) für -CH₃ oder -CH₂-CH₃ steht.

13. Verfahren nach einem der Ansprüche 1 bis 12, **dadurch gekennzeichnet, dass** das mindestens eine halogenierte Lösungsmittel, das zu dem Verfahrensschritt (a) und/oder (b) gegeben wird, aus der Gruppe bestehend aus Dichlormethan, Chloroform, Trichlorethylen und Chlorbenzol ausgewählt wird.

14. Verfahren nach einem der Ansprüche 1 bis 13, **dadurch gekennzeichnet, dass** das Molverhältnis von Verbindung der Formel (2) zu Chlorsulfonsäure in Verfahrensschritt (a) 1,0 bis 2,5 beträgt.

15. Verfahren nach einem der Ansprüche 1 bis 11, **dadurch gekennzeichnet, dass** die Verbindung der Formel (3) in Verfahrensschritt (b) in einem Molverhältnis zu der Verbindung der Formel (2), die in Verfahrensschritt (a) bereitgestellt wurde, von 0,8 bis 2,0 zugegeben wird.

## Revendications

1. Procédé de préparation d'un polycarbonate de formule (1) en utilisant une substitution aromatique électrophile, 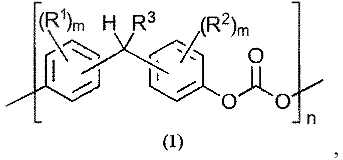
dans lequel dans la formule (1), chacun parmi R¹ et R² représente indépendamment un substituant qui est capable d'activer le cycle aromatique qu'il substitue par un effet mésomère et/ou un effet inductif,
R³ représente un atome d'hydrogène, un groupe aryle ou un groupe alkyle ayant 1 à 6 atomes de carbone,
chaque m est indépendamment 0 à 4 et
n est le nombre de motifs répétitifs, de préférence 6 à 60,
comprenant les étapes de
(a) mise en réaction d'au moins un composé de formule (2) avec l'acide chlorosulfonique, dans lequel au moins un équivalent molaire d'acide chlorosulfonique par rapport à la somme molaire de composés de formule (2) est utilisé, 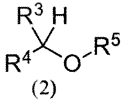
dans lequel dans la formule (2), R³ représente un atome d'hydrogène, un groupe aryle ou un groupe alkyle ayant 1 à 6 atomes de carbone et
R⁴ représente -O-R⁵ ou un atome d'halogène et
R⁵ représente un groupe alkyle linéaire ayant 1 à 5 atomes de carbone ou R⁴ et R⁵ formant ensemble un cycle pouvant être interrompu par au moins un atome d'oxygène ou de soufre,
et
(b) ajout d'un composé de formule (3) au mélange réactionnel de l'étape (a) du procédé, 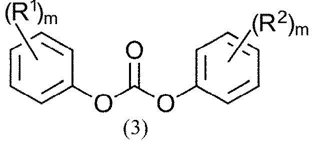
dans lequel dans la formule (3), chacun parmi R¹ et R² représente indépendamment un substituant qui est capable d'activer le cycle aromatique qu'il substitue par un effet mésomère et/ou un effet inductif et chaque m est indépendamment 0 à 4,
dans lequel soit au moins un solvant halogéné est ajouté à l'étape de procédé (a) et/ou (b), soit aucun solvant n'est ajouté du tout à l'étape de procédé (a) et/ou (b),
**caractérisé en ce qu'**il n'est pas utilisé d'acide de Lewis à base de métal à l'étape de procédé (a) et/ou (b).

2. Procédé selon la revendication 1, **caractérisé en ce que** le polycarbonate de formule (1) comprend une structure de formule (la) 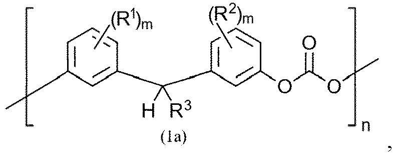
dans lequel dans la formule (1a), chacun parmi R¹ et R² représente indépendamment un substituant qui est capable d'activer le cycle aromatique qu'il substitue par un effet mésomère et/ou un effet inductif,
R³ représente un atome d'hydrogène, un groupe aryle ou un groupe alkyle ayant 1 à 6 atomes de carbone,
chaque m est indépendamment 0 à 4 et
n est le nombre de motifs répétitifs, de préférence 6 à 60,
dans lequel, à l'étape de procédé (b), le composé de formule (3) est ajouté au mélange réactionnel de l'étape de procédé (a), dans lequel chacun parmi R¹ et R² représente indépendamment un substituant capable d'activer le cycle aromatique qu'il substitue par un effet mésomère et/ou un effet inductif et chaque m est indépendamment 0 à 4.

3. Procédé selon la revendication 2, **caractérisé en ce que** chacun parmi R¹ et R² dans les formules (1a) et (3) représente indépendamment un substituant qui est capable de diriger un électrophile dans la position du cycle aromatique qui est *ortho-* ou *méta-,* de préférence *méta-*par rapport au groupe carbonate au niveau du même cycle aromatique.

4. Procédé selon l'une quelconque des revendications 1 à 3, **caractérisé en ce que** m dans la formule (1) ou (1a) et dans la formule (3) est 1 à 3.

5. Procédé selon l'une des revendications 2 à 4, **caractérisé en ce que** le polycarbonate de formule (1a) est représenté par le polycarbonate de formule (1b) 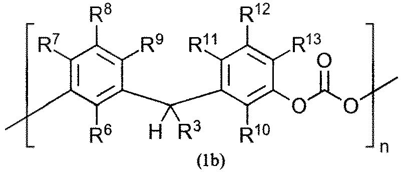
dans lequel dans la formule (1b) au moins l'un parmi R⁶, R⁷, R⁸ et R⁹ est un atome d'hydrogène et au moins l'un parmi R¹⁰, R¹¹, R¹² et R¹³ est un atome d'hydrogène à la condition qu'au moins l'un parmi R⁶, R⁷, R⁸ et R⁹ ne soit pas un hydrogène et au moins l'un parmi R¹⁰, R¹¹, R¹² et R¹³ ne soit pas un atome d'hydrogène,
chacun parmi R⁶ et R¹⁰ représente indépendamment un atome d'hydrogène, -NHR', -NR", -OR', -SR', un radical alkyle ayant 1 à 6 atomes de carbone, -F, -Cl, -Br ou -I, dans lequel chaque R' représente indépendamment un radical alkyle ayant 1 à 6 atomes de carbone,
chacun parmi R⁷ et R¹³ représente indépendamment un atome d'hydrogène, -NHR', -NR", -OR', -SR', un radical alkyle ayant 1 à 6 atomes de carbone, -F, -Cl, -Br ou -I, dans lequel chaque R' représente indépendamment un radical alkyle ayant 1 à 6 atomes de carbone,
chacun parmi R⁸ et R¹² représente indépendamment un atome d'hydrogène, -NO₂, -NR'₃⁺, -CF₃, -CCl₃, -C(=O)R' ou -CN, dans lequel chaque R' représente indépendamment un radical alkyle ayant 1 à 6 atomes de carbone,
chacun parmi R⁹ et R¹¹ représente indépendamment un atome d'hydrogène, -NHR', -NR", -OR', -SR', un radical alkyle ayant 1 à 6 atomes de carbone, -F, -Cl, -Br ou -I, dans lequel chaque R' représente indépendamment un radical alkyle ayant 1 à 6 atomes de carbone
et R³, m et n ont les significations telles que données en rapport avec la formule (la),
dans lequel, à l'étape de procédé (b), un composé de formule (3b) est ajouté au mélange réactionnel de l'étape de procédé (a), 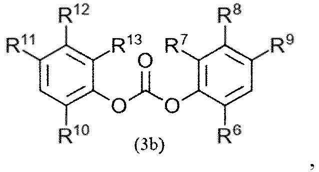
dans lequel R⁶ à R¹³ dans la formule (3b) ont la signification donnée en rapport avec la formule (1b).

6. Procédé selon la revendication 5, **caractérisé en ce que** chacun parmi R⁶, R⁸, R¹⁰ et R¹² représente un atome d'hydrogène.

7. Procédé selon l'une quelconque des revendications 5 ou 6, **caractérisé en ce que** chacun parmi R⁷, R⁹, R¹¹ et R¹³ représente indépendamment un atome d'hydrogène, -OCH₃, -OCH₂CH₃, -OCH₂CH₂CH₃, -OCH₂CH₂CH₂CH₃, -CH₃, -CH₂CH₃, - CH₂CH₂CH₃, -CH₂CH₂CH₂CH₃ ou -C(CH₃)₃.

8. Procédé selon la revendication 5, **caractérisé en ce que** chacun parmi R⁶, R⁸, R¹⁰ et R¹² représente un atome d'hydrogène, chacun parmi R⁷ et R¹³ représente -OCH₃ et chacun parmi R⁹ et R¹¹ représente un atome d'hydrogène, - CH₂CH₂CH₃ ou -C(CH₃)₃.

9. Procédé selon l'une des revendications 1 à 8, **caractérisé en ce que** R³ représente un atome d'hydrogène ou un groupe phényle.

10. Procédé selon l'une des revendications 1 à 9, **caractérisé en ce que** le polycarbonate de formule (1), de formule (la) ou de formule (1b) présente un poids moléculaire moyen en poids de 15 000 g/mole à 40 000 g/mole, déterminé par chromatographie d'exclusion stérique.

11. Procédé selon l'une quelconque des revendications 1 à 10, **caractérisé en ce que** R⁴ dans la formule (2) représente -Cl, -Br, -O-CH₃ ou -O-CH₂-CH₃.

12. Procédé selon l'une quelconque des revendications 1 à 11, **caractérisé en ce que** R⁵ dans la formule (2) représente -CH₃ ou -CH₂-CH₃.

13. Procédé selon l'une quelconque des revendications 1 à 12, **caractérisé en ce que** l'au moins un solvant halogéné qui est ajouté à l'étape de procédé (a) et/ou (b) est choisi dans le groupe constitué du dichlorométhane, du chloroforme, du trichloréthylène et du chlorobenzène.

14. Procédé selon l'une quelconque des revendications 1 à 13, **caractérisé en ce que** le rapport molaire du composé de formule (2) sur l'acide chlorosulfonique à l'étape de procédé (a) est de 1,0 à 2,5.

15. Procédé selon l'une quelconque des revendications 1 à 11, **caractérisé en ce que** le composé de formule (3) est ajouté à l'étape de procédé (b) en un rapport molaire par rapport au composé de formule (2) qui a été fourni à l'étape de procédé (a) de 0,8 à 2,0.
